# EUROPÄISCHE PATENTSCHRIFT

(11) **EP 4 059 874 B1**
(45) Veröffentlichungstag und Bekanntmachung des Hinweises auf die Patenterteilung: **19.02.2025**
(21) Anmeldenummer: 21163536.2
(22) Anmeldetag: 18.03.2021
(51) Int. Cl.: G01D 5/347, B66B 1/34

(54) **FÜHRUNGSEINHEIT UND ADAPTERVORRICHTUNG SOWIE SENSOREINHEIT FÜR EINE AUFZUGSANLAGE**
GUIDE UNIT AND ADAPTER DEVICE AND SENSOR UNIT FOR AN ELEVATOR INSTALLATION
UNITÉ DE GUIDAGE ET DISPOSITIF ADAPTATEUR, AINSI QU'UNITÉ DE CAPTEUR POUR UNE INSTALLATION D'ASCENSEUR

(43) Veröffentlichungstag der Anmeldung: 21.09.2022
(73) Patentinhaber: Grimm, Felix, 78239 Rielasingen (DE)
(72) Erfinder: ROHR, Stephan, 9495 Triesen (LI); JANESCH, Stephan, 8524 Buch bei Frauenfeld (CH)
(74) Vertreter: Patent- und Rechtsanwälte Behrmann Wagner PartG mbB

(56) Entgegenhaltungen:
- EP-A1- 1 813 564
- EP-A1- 3 736 540
- DE-U1- 202011 051 666

## Beschreibung

Die vorliegende Erfindung betrifft eine Führungseinheit und eine Adaptervorrichtung für eine an sich bekannte Sensoranordnung einer Aufzugsanlage zur Bestimmung einer Fahrkorbposition, sowie eine optimierte Sensoreinheit für eine Aufzugsanlage zur Bestimmung der Position eines Fahrkorbs in einem Aufzugschacht mittels Zusammenwirken mit einer Positionskodierung eines Messbands der Aufzugsanlage.

Vorrichtungen zur Positionserkennung eines Fahrkorbs einer Aufzugsanlage sind aus dem Stand der Technik bereits bekannt. Diese dienen der Bereitstellung von Informationen über die aktuelle Position des Fahrkorbs entlang des Aufzugsschachts bzw. der zugehörigen Aufzugsschienen im Schacht. Neben einfachen Positionsgebern wie beispielsweise Schachtschaltern, welche über eine aktuelle Fahrkorbposition an vordefinierten Stellen im Aufzugsschacht Rückmeldung geben, existieren auch inkrementale Positionsgeber, welche an jeder Stelle im Schacht eine genaue Positionsbestimmung ermöglichen.

Die EP 3 231 753 lehrt beispielsweise eine Aufzugsanlage mit einem im Aufzugsschacht angeordneten Messband zur Positionsbestimmung des Fahrkorbs im Aufzugsschacht. Das Messband weist eine optische Kodierung in Form von aufeinanderfolgenden Positionsmustern, insbesondere 2D-Codes, zur Längenmessung auf. Am Fahrkorb ist eine Sensoreinrichtung befestigt, die eine Beleuchtungsquelle und einen Sensor umfasst, welche ein Detektionsfeld zum Detektieren des Messbandes und Auswerten einer entsprechenden Fahrkorbposition umfasst. Ein derartiges Messband ist üblicherweise als Stahlband ausgeführt, an welchem der optische Code aufgedruckt und mit einer Kunststoffschicht umschlossen ist.

Die Firma Fritz Kübler GmbH vertreibt ein System zur Positionserkennung eines Fahrkorbs in einem Aufzugsschacht, in welchem ein gelochtes Stahlband mittels eines am Fahrkorb angeordneten optischen Sensors abgetastet wird. Das Stahlband weist eine Positionskodierung in der Form von Bohrungen und/oder Langlöchern auf, welches mit Hilfe einer Lichtschranke berührungslos abgetastet wird.

Derartige optische Systeme weisen jedoch den Nachteil einer erhöhten Störanfälligkeit bei einer in die Mechanik des Aufzugssystems eintretenden Verschmutzung auf.

Ebenfalls bekannt sind auf magnetischer Beeinflussung basierende Systeme, in welchen das Messband ins Band eingebrachte permanentmagnetische Abschnitte zur Bereitstellung einer Kodierung aufweist, welche durch wenigstens einen Magnetfeldsensor der mit dem Messband zusammenwirkenden Sensoranordnung auslesbar ist.

Die DE 10 2009 054 337 A1 zeigt eine solche auf magnetischer Beeinflussung beruhende Vorrichtung zur Längen- und/oder Positionserfassung des Fahrkorbs einer Aufzugsanlage, wobei eine Sensoranordnung in einem Trägerkörper an dem Fahrkorb befestigt ist, um mit einem am Aufzugsschacht längserstreckend befestigten Messband bzw. Magnetbandeinheit umfassend einen Längsstreifen aus einem magnetischen Material zur Positionserfassung zusammenzuwirken. Durch eine kodierte Permanentmagnetisierung des Messbands bzw. der Magnetbandeinheit lässt sich mittels der Sensoranordnung, insbesondere mit Magnetfeldsensoren, die Position des Fahrkorbs relativ zu dem Aufzugschacht bestimmen. Die Sensoranordnung weist weiterhin in einem Gehäuse eine Ausnehmung oder einen Führungsschlitz zur Aufnahme und beweglichen Führung des Messbands bzw. der Magnetbandeinheit auf.

Bei derartigen magnetischen Systemen mit einem permanentmagnetisierten Messband bzw. Magnetbandeinheit kann es ebenfalls zu einer erhöhten Störanfälligkeit bei einer in die Mechanik des Aufzugssystems eintretenden Verschmutzung kommen, insbesondere bei einer Ablagerung von metallischen Partikeln auf den permanentmagnetischen Bereichen des Messbands, welche die Auslesung durch die zugeordnete Sensoranordnung beeinträchtigen können.

Bei der Benutzung solcher Systeme kann es zudem zu einem erheblichen Verschleiß zwischen dem permanentmagnetisierten Messband und einem Führungsbereich in dem Gehäuse der Sensoranordnung kommen, wobei sich dieser Verschleiß insbesondere bei einer eintretenden Verschmutzung des Messbands bemerkbar macht. Für den Austausch kann es erforderlich sein, dass die gesamte Sensoranordnung ausgetauscht werden muss, wobei bei einem Ersatz eine neue Kalibrierung der Sensoren und der magnetischen Abstimmung mit dem Messband erforderlich sein kann.

Ferner offenbart die DE 20 2011 051666 U1 eine Vorrichtung zur Positionserfassung einer Aufzugkabine mit einer langgestreckten, eine magnetische Längen- und/oder Positionscodierung aufweisenden, bandförmigen Trägereinheit und einer relativ zu der Trägereinheit bewegbaren, an dieser längsverschieblich geführten Messschlitteneinheit der Aufzugkabine, wobei die Messschlitteneinheit zum Aufnehmen einer mit der Längen- bzw. Positionscodierung zusammenwirkenden magnetischen Sensor- und Auswerteeinheit ausgebildet ist und die Längen- bzw. Positionscodierung mittels eines codiert magnetisierten Längsstreifens realisiert ist, der in einer Führung der Messschlitteneinheit mittels eines langgestreckten, relativ zur Messschlitteneinheit feststehenden Gleitelements gleitend geführt ist.

Die EP 1 813 564 A1 offenbart eine Vorrichtung zur Erzeugung von Schachtinformation umfassend ein Gehäuse mit einem Boden und einem Deckel, eine Gleitführung mit einem Codeträger und eine Elektronikplatte mit einem Sensor zur Erfassung des Codes auf dem Codeträger, sowie elektronische Schaltkreise zur Auswertung des erfassten Codes, wobei die Gleitführung in einem Gleitführungskanal schiebbar angeordnet ist. Beim Verfahren der Aufzugskabine gleitet der Codeträger in der Gleitführung am Sensor vorbei.

Der vorliegenden Erfindung liegt daher die Aufgabe zugrunde, eine verbesserte Vorrichtung und ein zugehöriges Messsystem bereitzustellen, welche die oben genannten Nachteile des Standes der Technik überwinden oder zumindest deutlich abschwächen. Hierbei soll neben einer zuverlässigen Erfassung der Fahrkorbposition im Aufzugsschacht eine einfache und kostengünstige Wartung, insbesondere eine Reduktion der Wartungsintervalle einer Aufzugsanlage, ermöglicht werden. Weiterhin soll ein konstruktiv einfaches und möglichst kostengünstiges Messsystem im Aufzugsschacht bereitstellbar sein.

Diese Aufgabe wird durch die Gegenstände der unabhängigen Ansprüche gelöst. Die Unteransprüche stellen vorteilhafte Weiterbildungen der vorliegenden Erfindung dar. Die Erfindung adressiert zudem weitere Probleme, welche in der nachfolgenden Beschreibung erläutert wird.

In einem ersten Aspekt betrifft die Erfindung eine Führungseinheit für eine Sensoranordnung zur Bestimmung der Position eines Fahrkorbs in einem Aufzugschacht mittels Zusammenwirkung wenigstens eines Magnetfeldsensors der Sensoranordnung mit einer Positionskodierung eines zur Sensoranordnung relativ beweglichen Messbands, wobei die Führungseinheit zum Zusammenwirken mit einer nutförmigen Ausnehmung eines Gehäuses der Sensoranordnung und zur Führung des Messbands entlang des wenigstens einen Magnetfeldsensors ausgebildet ist, wobei die Führungseinheit Magnetfelderzeugungsmittel zur temporären Magnetisierung eines in der Führungseinheit entlang einer Längserstreckungsrichtung bzw. Längsachse geführten Messbands aus ferromagnetischen Material aufweist.

Die Sensoranordnung ist hierbei eine aus dem Stand der Technik bekannte Sensoranordnung aufweisend ein Gehäuse, welches vorzugsweise zur positionsfesten Anordnung an einem Fahrkorb eines Aufzugssystems ausgebildet ist und zur Relativbewegung entlang des im Aufzugschacht im Wesentlichen vertikal angeordneten Messbands ausgebildet ist. Das Gehäuse weist eine nutförmige Ausnehmung auf, welche zur wenigstens teilweisen Aufnahme und/oder Führung des Messbands ausgebildet ist. Im Betrieb der Aufzugsanlage, fährt der Fahrkorb mit daran befestigter Sensoranordnung entlang des Messbands im Aufzugsschacht, wobei durch das Zusammenwirken von Messband und zugeordneter Sensoranordnung eine Positionsbestimmung des Fahrkorbs im Aufzugschacht ermöglicht wird. Die Sensoranordnung ist vorzugsweise dazu eingerichtet, die Lage, Geschwindigkeit und/oder Beschleunigung eines zugeordneten Fahrkorbs durch Auslesen der Positionskodierung des Messbands an eine übergeordnete Steuerung weiterzugeben. Die Sensoranordnung und/oder die Steuerung können hierzu einen entsprechend konfigurierten Mikrokontroller aufweisen. Bei dem Messband aus dem Stand der Technik bzw. für welches die Sensoranordnung gemäß dem Stand der Technik ausgelegt ist, handelt es sich um ein permanentmagnetisiertes Messband zur Bereitstellung einer Positionskodierung, welches vom wenigstens einen Magnetfeldsensor der Sensoranordnung ausgelesen bzw. abgetastet werden kann.

Durch die erfindungsgemäße Führungseinheit mit den darin vorgesehenen Magnetfelderzeugungsmittel ergibt sich nun der überraschende Vorteil, dass unter Beibehaltung der Sensoranordnung aus dem Stand der Technik ein Messband aus ferromagnetischem Material verwendet werden kann, welches keine kostenintensive Permanentmagnetisierung zur Bereitstellung einer Positionskodierung aufweist. Durch die Verwendung eines Messbands aus ferromagnetischem Material wird zudem eine Verschmutzung und ein Verschleiß des Messbands, insbesondere ein Anhaften von metallischen Partikeln, während des Betriebs der Sensoranordnung deutlich reduziert oder ganz vermieden. Anstelle eines Partikel anziehenden permanentmagnetischen Messbands sind nun Magnetfelderzeugungsmittel in der Führungseinheit angeordnet und das ferromagnetische Messband wird lediglich lokal im Bereich der Sensoranordnung und temporär magnetisiert. Durch diese temporäre Magnetisierung lässt sich mittels des wenigstens einen Magnetfeldsensors der Sensoranordnung eine vorgesehene Positionskodierung des ferromagnetischen Messbands auslesen.

Die Positionskodierung umfasst hierbei vorzugsweise spezifisch angeordnete und/oder spezifisch ausgebildete Aussparungen bzw. Ausbrüche in einem ferromagnetischen Grundkörper des Messbands, welche unter temporärer Magnetisierung durch die Magnetfelderzeugungsmittel durch den wenigstens einen Magnetfeldsensor der Sensoranordnung auslesbar oder abtastbar ist. Derartige Aussparungen bzw. Ausbrüche sind deutlich kosteneffizienter in ein Messband aus ferromagnetischem Material einbringbar als die Einbringung einer Positionskodierung durch spezifische bzw. kodierte Permanentmagnetisierung eines Messbandes, so dass die Gesamtkosten für ein derartiges Messsystem deutlich reduziert werden können.

Weiterhin ergibt sich neben der reduzierten Verschmutzung des Messbands auch der Vorteil, dass die Führungseinheit selbst auswechselbar in dem Gehäuse der Sensoranordnung angeordnet werden kann. Bei einem erhöhten Verschleiß an der Führungseinheit kann diese aus der ersten Sensoranordnung verhältnismäßig einfach demontiert werden, ohne dabei das gesamte Gehäuse mit kostenintensiven und kalibrierten Magnetfeldsensoren austauschen zu müssen.

Die erfindungsgemäße Führungseinheit ermöglicht somit die adaptive Nachrüstung einer bestehenden Sensoranordnung aus dem Stand der Technik unter Erzielung der vorgenannten Vorteile. Die an sich bekannte Sensoranordnung bleibt hierbei vorzugsweise unverändert und kann unter lediglich einmaligem Neukalibrieren und/oder Einlernen des wenigstens einen Magnetfeldsensors bzw. der Magnetfeldsensoren die oben genannten Vorteile ermöglichen.

Mit anderen Worten ist also die Führungseinheit als Teil einer modular aufgebauten Sensoranordnung einsetzbar, wobei kostengünstig herstellbare Bauteile mit hohem Verschleiß, wie die Führungseinheit selbst, leicht austauschbar sind. Hochwertige und teure Bauteile, wie die erste Sensoranordnung mit Leiterplatten (PCB), elektronischen Anschlüssen und Magnetfeldsensoren sind dagegen möglichst wartungsfrei betreibbar.

Die Führungseinheit umfasst vorzugsweise eine Führungsschiene oder eine Art Gleitelement zur Führung des Messbands in der Führungseinheit, an dem die Magnetfelderzeugungsmittel befestigt oder befestigbar sind.

Vorzugsweise ist die Führungsschiene mit einer nutförmigen Vertiefung zur Aufnahme und Führung des Messbands und daran seitlich verlaufene Führungswangen ausgebildet, wobei eine Höhe der Vertiefung bevorzugt mindestens der Dicke des damit zusammenwirkenden Messbands entspricht. Dadurch kann gewährleistet werden, dass im montierten Zustand das Messband in erster Linie mit der Führungsschiene gleitend zusammenwirkt und wenig bis kein Verschleiß an dem Gehäuse der Sensoranordnung auftritt.

Die Magnetfelderzeugungsmittel sind vorzugsweise derart angeordnet, dass die Positionskodierung des Messbands, vorzugsweise umfassend spezifisch angeordnete und/oder spezifisch ausgebildete Aussparungen in einem ferromagnetischen Grundkörper des Messbands, von dem wenigstens einen Magnetfeldsensor der Sensoranordnung auslesbar oder abtastbar ist.

Die Magnetfelderzeugungsmittel umfassen vorzugsweise wenigstens zwei Permanentmagnete, welche sich entlang der Längserstreckungsrichtung der Führungseinheit erstrecken. Die Permanentmagnete sind vorzugsweise seitlich und weiterhin bevorzugt beidseits einer Längsachse der Führungseinheit angeordnet und weisen vorzugsweise jeweils gegenüberliegend eine unterschiedliche Polung auf. Die Magnetfelderzeugungsmittel können alternativ elektromagnetische Spulenmittel umfassen, welche jeweils zur Ausbildung eines temporären Magnetfelds mittels eines selektiv anlegbaren Ansteuersignals ausgebildet sind. Die Spulenmittel können hierbei eine Mehrzahl von vorzugsweise seitlich und beidseits der Längsachse der Führungseinheit angeordnete Spulenkörpern aufweisen. Die Magnetfelderzeugungsmittel sind vorzugsweise jeweils seitlich der nutförmigen Vertiefung der Führungsschiene zur Aufnahme und Führung des Messbands angeordnet.

Die Positionskodierung des Messbands weist vorzugsweise eine Vielzahl von in Längsrichtung des Messbands vorzugsweise aufeinanderfolgend angeordnete und mittels des Magnetsensors während der temporären Magnetisierung magnetisch unterscheidbare Bereiche auf. Bevorzugt handelt es sich bei diesen magnetisch unterscheidbaren Bereichen um gestanzte, gelochte oder gelaserte Aussparungen und/oder Langlöcher in dem ferromagnetischen Material oder Grundkörper des Messbands und/oder um von derartigen Aussparungen und/oder Langlöcher in dem ferromagnetischen Material wenigstens teilweise umgrenzte Teilbereiche des Messbands.

In einer besonders bevorzugten Ausführungsform nimmt die Führungseinheit wenigstens zwei Permanentmagneten unterschiedlicher Polung seitlich zur Längserstreckungsrichtung der Führungseinheit, insbesondere form- und/oder stoffschlüssig und bevorzugt in seitlichen Vertiefungen, und sich gegenüberliegend auf. Die seitlichen Vertiefungen sind vorzugsweise für eine formschlüssige Verbindung der wenigstens zwei Permanentmagnete mit vorgesehenen Rast- oder Verriegelungselementen der Führungseinheit abgedeckt. Die Führungseinheit ist also vorzugsweise derart ausgebildet, dass sich die wenigstens zwei Permanentmagnete unterschiedlicher Polung entlang gegenüberliegender Seiten in Längsrichtung des Messbands erstrecken und das Messband temporär magnetisieren. Die Permanentmagnete sind vorzugsweise seitlich an den Führungswangen, vorzugsweise innerhalb seitlicher Vertiefungen in den Führungswangen, der Führungsschiene der Führungseinheit eingebracht.

Die wenigstens zwei Permanentmagnete unterschiedlicher Polung sind also jeweils zum Zusammenwirken mit den magnetisch unterscheidbaren Bereichen ausgebildet und bezüglich des Messbands angeordnet. Dabei umfassen die magnetisch unterscheidbaren Bereiche des Messbands vorzugsweise wenigstens einen ersten Bereich, welcher mit einem dem Messband zugeordneten ersten Permanentmagneten (bspw. Nordpol) zur Ausbildung eines ersten Magnetfelds zusammenwirken kann und wenigstens einen zweiten Bereich, welcher mit einem dem Messband zugeordneten zweiten und anderspoligen Permanentmagneten (bspw. Südpol) zur Ausbildung eines zweiten, vom ersten Magnetfeld unterscheidbaren Magnetfelds zusammenwirken kann. An den die magnetisch unterscheidbaren Bereiche wenigstens teilweise umgebenden Aussparungen und/oder Langlöchern können dabei Feldliniensprünge auftreten, welche durch den wenigstens einen Magnetfeldsensor auslesbar sind. Dadurch lässt sich eine bestimmte Positionskodierung des Messbands temporär magnetisieren und mittels des wenigstens einen Magnetfeldsensors auslesen.

Vorzugsweise können mehrere Permanentmagnete entlang der Längserstreckungsrichtung der Führungseinheit mit gleicher oder unterschiedlicher Polung auch in Reihe angeordnet sein. Besonders bevorzugt ist jedoch vorgesehen, dass die mehreren Permanentmagnete entlang der Längserstreckungsrichtung mit gleicher Polung in Reihe angeordnet sind, wobei die sich seitlich zu der Längserstreckungsrichtung gegenüberliegenden Reihen an Permanentmagneten die bereits oben beschriebene unterschiedliche Polung aufweisen.

Die Permanentmagneten weisen vorzugsweise entlang der Längserstreckungsrichtung eine Länge von 30mm bis 600mm, mehr bevorzugt von 40mm bis 550mm, ganz besonders bevorzugt von 40mm bis 80mm auf. Die Permanentmagnete sind vorzugsweise als Stabmagnete ausgebildet und weisen in Längsrichtung einen konstanten Durchmesser auf.

Die Führungseinheit weist eine längliche Bauteilform mit im Wesentlichen U-förmigen Querschnitt auf, welche zum Einschieben bzw. Einstecken in eine nutförmige Ausnehmung der Sensoranordnung ausgebildet ist. Die Breite und Höhe der Führungseinheit ist vorzugsweise in Längserstreckungsrichtung konstant. Weiterhin bevorzugt weist die Führungseinheit Anschlagsmittel auf, um im montierten Zustand mit der Sensoranordnung entlang der Längsachse einen formschlüssigen Anschlag auszubilden. Die Anschlagsmittel können eine vorzugsweise endseitig der Führungseinheit angeordnete bzw. ausgebildete Querschnittserweiterung umfassen. Dadurch lässt sich die Führungseinheit in die nutförmige Ausnehmung der Sensoranordnung einstecken und entlang der Längserstreckungsrichtung mit dem Anschlag fixieren. Des Weiteren kann die Querschnittserweiterung als Einführhilfe dienen, um eine Einführrichtung vorzugeben.

Weiterhin ist bevorzugt, dass die Führungseinheit, insbesondere die Führungsschiene, aus einem Kunststoffmaterial, insbesondere einem reibungsarmen und verschleißarmen Kunststoff, vorzugsweise PTFE, besteht. Durch die Verwendung eines Kunststoffmaterials kann besonders Verschleiß, sowie Reibungskräfte an dem Messband reduziert werden.

Die Länge der Führungseinheit entspricht vorzugsweise zumindest einer Länge der Sensoranordnung. Die Breite der Führungseinheit entspricht vorzugsweise einer Breite der nutförmigen Ausnehmung der Sensoranordnung, um die Führungseinheit bevorzugt formschlüssig in der Sensoranordnung einführen oder einstecken zu können.

Vorzugsweise weist die Führungseinheit eine Länge von 100mm bis 700mm, besonders bevorzugt von 250mm bis 550mm, und/oder eine Breite von 8mm bis 25mm, besonders bevorzugt von 10mm bis 15mm auf. Vorzugsweise weist die Führungseinheit eine Führungsschiene oder ein Gleitelement mit einer nutförmigen Vertiefung mit einer Breite von 10mm bis 15mm zur Führung des Messbands auf.

In einem weiteren Aspekt betrifft die Erfindung eine Adaptervorrichtung, insbesondere eine Adapterplatte, zur vorzugsweise bodenseitigen Anbringung an ein Gehäuse einer Sensoranordnung zur Bestimmung der Position eines Fahrkorbs in einem Aufzugschacht mittels Zusammenwirkung wenigstens eines Magnetfeldsensors der Sensoranordnung mit einer Positionskodierung eines zur Sensoranordnung relativ beweglichen Messbands, wobei die Adaptervorrichtung zum Zusammenwirken mit einer nutförmigen ersten Ausnehmung des Gehäuses der Sensoranordnung ausgebildet ist, wobei die Adaptervorrichtung eine nutförmige zweite Ausnehmung aufweist, welche zur Aufnahme eines Messbands aus ferromagnetischen Material sowie zur Aufnahme einer Führungsschiene für das Messband ausgebildet ist, derart, dass das Messband entlang des wenigstens einen Magnetfeldsensors der Sensoranordnung geführt ist, wobei die Adaptervorrichtung seitlich einer Längserstreckungsrichtung der nutförmigen zweiten Ausnehmung angeordnete Magnetfelderzeugungsmittel aufweist, welche zur temporären Magnetisierung des Messbands aus ferromagnetischem Material ausgebildet sind.

Die Adaptervorrichtung findet alternativ zu der zuvor beschriebenen erfindungsgemäßen Führungseinheit Anwendung und ist vorzugsweise selektiv mit einem Gehäuse einer Sensoranordnung aus dem Stand der Technik verbindbar. Im Unterschied zur vorgenannten Führungseinheit ist die Führungsschiene bzw. das Gleitelement für das Messband nunmehr nicht integral mit der restlichen Einheit, sondern als separat austauschbares und mit der Adaptervorrichtung selektiv verbindbares Element ausgebildet.

Die bereits beschriebenen Vorteile der Verwendung einer Führungsschiene umfassend Magnetfelderzeugungsmittel gelten analog auch für die erfindungsgemäße Adaptervorrichtung. So ergibt sich ebenfalls der Vorteil, dass durch die vorgesehenen Magnetfelderzeugungsmittel ein Messband aus einem ferromagnetischen Material durch temporäre Magnetisierung zur Auslesung der Positionskodierung verwendet werden kann und eine Verschmutzung des Messbands und ein Verschleiß an der Messbandführung, insbesondere ein Anhaften von metallischen Partikeln, reduziert werden kann. Des Weiteren ergibt sich neben der reduzierten Verschmutzung des Messbands auch der Vorteil, dass die Adaptervorrichtung auch für eine bestehende Sensoranordnung nachgerüstet werden kann. Außerdem ist auch bei der Adaptervorrichtung die separat ausgebildete Führungsschiene als Gleitelement einsetzbar, wobei dieses bei erhöhtem Verschleiß leicht auswechselbar ist, ohne dabei das gesamte Gehäuse mit kostenintensiven Magnetfeldsensoren austauschen zu müssen. Zusätzlich ergibt sich der Vorteil, dass dabei die Magnetfelderzeugungsmittel innerhalb der Adaptervorrichtung vorzugsweise ebenfalls nicht ausgetauscht werden, und hier weitere Kosten eingespart werden und auch eine eventuelle Kalibrierung der Magnetfelderzeugungsmittel, beispielsweise eine spezifische Anordnung von Permanentmagneten, nicht notwendig ist.

Mit anderen Worten ist also die Adaptervorrichtung als Teil einer modular aufgebauten Sensoranordnung einsetzbar, wobei kostengünstig herstellbare Bauteile mit hohem Verschleiß, wie die Führungsschiene als Gleitelement für das Messband, leicht austauschbar sind. Hochwertige und teure Bauteile, wie die Sensoranordnung mit Leiterplatten, elektronischen Anschlüssen und Magnetfeldsensoren, sowie auch die Magnetfelderzeugungsmittel sind auf Grund der Verwendung der erfindungsgemäßen Adaptervorrichtung vorteilhafterweise möglichst wartungsfrei betreibbar.

Für die adaptive Kopplung mit einer vorzugsweise bestehenden Sensoranordnung weist die Adaptervorrichtung eine vorzugsweise im Wesentlichen U-förmige Profilierung auf, welche zum Eingriff in die nutförmige erste Ausnehmung des Gehäuses der Sensoranordnung ausgebildet ist, derart, dass die nutförmige zweite Ausnehmung der Adaptervorrichtung im Wesentlichen parallel zur ersten Ausnehmung des Gehäuses angeordnet ist. Dadurch kann also die Adaptervorrichtung nachgerüstet werden und eine bestehende Sensoranordnung aus dem Stand der Technik mit einer Führungsschiene erweitern und zum Betrieb bzw. zum Zusammenwirken mit einem ferromagnetischen Messband ausbilden.

Zur Kopplung weist die Adaptervorrichtung vorzugsweise Verbindungsmittel auf, beispielsweise eine Schraubverbindung oder eine Art Steck- oder Klickverbindung, die als Gegenstück zur Verbindung mit bekannten bestehenden Sensoranordnungen ausgebildet sind.

In einer bevorzugten Ausführungsform der Adaptervorrichtung ist die zweite nutförmige Ausnehmung in einer Unterseite der Adaptervorrichtung angeordnet oder ausgebildet, wobei erste Vorsprünge entlang der Unterseite ausgebildet sind, um die nutförmige zweite Ausnehmung zumindest teilweise derart seitlich zu der Längserstreckungsachse zu schließen, dass einerseits die Führungsschiene seitlich zu der Längserstreckungsachse formschlüssig befestigt ist und andererseits ein fest installiertes Messband weiterhin in die nutförmige zweite Ausnehmung seitlich einsetzbar ist. Die Führungsschiene wird dabei vorzugsweise durch ein Einstecken entlang der Längserstreckungsachse montiert.

Die Adaptervorrichtung umfasst vorzugsweise zwei seitlich zur Längserstreckungsrichtung der nutförmigen Ausnehmung angeordnete und sich vorzugsweise parallel dazu erstreckende Aufnahmeöffnungen zur Anordnung der Magnetfelderzeugungsmittel.

Die Magnetfelderzeugungsmittel umfassen vorzugsweise wenigstens zwei Permanentmagnete, bevorzugt unterschiedlicher Polung, welche im Wesentlichen parallel zur Längserstreckungsrichtung angeordnet sind. Hierbei kann die Adaptervorrichtung zwei seitliche Aufnahmeöffnungen zur Aufnahme der Permanentmagneten aufweisen, welche vorzugsweise durch zweite Vorsprünge und/oder durch Trennwände von der nutförmigen Ausnehmung für die Führungsschiene abgetrennt sind. Die wenigstens zwei seitlichen Aufnahmeöffnungen sind also vorzugsweise unmittelbar seitlich der zweiten nutförmigen Ausnehmung angeordnet, um durch einen geringen Trennabstand die temporäre Magnetisierung des ferromagnetischen Messbands zu begünstigen und gleichzeitig den Bauraum für die zusätzlichen seitlichen Permanentmagnete zu reduziert.

Ein Trennabstand zwischen der zweiten nutförmigen Ausnehmung und den vorteilhaft vorgesehenen wenigstens zwei seitlichen Aufnahmeöffnungen, insbesondere eine Breite der zweiten Vorsprünge oder der Trennwände, beträgt vorzugsweise zwischen 0,5mm bis 2,5mm, mehr bevorzugt 1mm bis 2mm. Besonders bevorzugt beträgt der Trennabstand oder die Breite der Trennwände 1mm bis 1,5mm, um eine ausreichende mechanische Stabilität zu gewährleisten.

Bevorzugt bei kurzen zweiten Vorsprüngen oder nasenförmigen Vorsprüngen beträgt der Trennabstand oder eine Breite der nasenförmigen Vorsprünge zwischen 0,1mm bis 0,5mm, ganz besonders bevorzugt ca. 0,2mm. Diese nasenförmigen Vorsprünge sind besonders für eine nachrüstbare Adaptervorrichtung bevorzugt, da dadurch ein möglichst kleiner zusätzlicher Bauraum für die wenigstens zwei Aufnahmeöffnungen in Anspruch genommen wird und die Adapterplatte so zur Führung von vorhandenen Messbändern geeignet ist und in die erste nutförmige Ausnehmung einer vorhandenen Sensoranordnung aus dem Stand der Technik einsetzbar ist.

In einer bevorzugten Ausführungsform sind die wenigstens zwei Aufnahmeöffnungen seitlich der ersten Ausnehmung auf einer den Trennwänden gegenüberliegenden Seite quer zu der Längsrichtung zumindest teilweise geöffnet, um Permanentmagnete in variierender Breite aufzunehmen. Dabei kann die Breite der Permanentmagnete vorteilhafterweise den Anforderungen an die temporäre Magnetisierung des Messbands angepasst werden.

In einer alternativen Ausführungsform können die Magnetfelderzeugungsmittel auch wenigstens zwei, vorzugsweise eine Vielzahl, seitlich der Längserstreckungsrichtung angeordnete elektromagnetische Spulenmittel umfassen, welche jeweils zur Ausbildung eines temporären Magnetfelds mittels eines anlegbaren Ansteuersignals ausgebildet sind. Die Spulenmittel können beispielsweise einen Kernbereich, beispielsweise umfassend einen Bolzen oder eine Schraube, vorzugsweise aus ferromagnetischem Material, und eine mantelseitig vorgesehene Spulenwicklung aufweisen. Die jeweiligen Spulenmittel sind durch eine zugeordnete Steuereinheit vorzugsweise derart ansteuerbar ausgebildet, dass sich auf den beiden gegenüberliegenden Seiten der nutförmigen Ausnehmung ein temporäres Magnetfeld mit gegensätzlicher Polausrichtung ausbilden lässt.

Bevorzugt ist die Adaptervorrichtung aus Aluminium, vorzugsweise in einem Strangpressverfahren, herstellbar. Weiter bevorzugt besteht die Adaptervorrichtung in Längserstreckungsrichtung aus einem Stück, wobei zur Montage die Magnetfelderzeugungsmittel und die Führungsleiste in die Adaptervorrichtung entlang der Längserstreckungsrichtung einschiebbar sind.

Die zweite Ausnehmung und die vorzugsweise vorgesehenen wenigstens zwei Aufnahmeöffnungen sind endseitig entlang der Längserstreckungsrichtung mit aufsetzbaren Abdeckungen verschließbar, wobei die Abdeckungen im montierten Zustand der Führungsschiene und der Magnetfelderzeugungsmittel aufgesteckt oder aufgeklippst werden kann.

Weiterhin betrifft die Erfindung eine Sensoreinheit zur Bestimmung der Position eines Fahrkorbs in einem Aufzugschacht mittels Zusammenwirkung wenigstens eines Magnetfeldsensors der Sensoreinheit mit einer Positionskodierung eines zur Sensoreinheit relativ beweglichen Messbands, wobei ein Gehäuse der Sensoreinheit eine nutförmige Ausnehmung zur Führung des Messbands aufweist, wobei die Sensoreinheit eine in der nutförmigen Ausnehmung vorzugsweise auswechselbar angeordnete Führungsschiene zur Führung des Messbands entlang des wenigstens einen Magnetfeldsensors aufweist, und wobei die Sensoreinheit seitlich einer Längserstreckungsrichtung der nutförmigen Ausnehmung angeordnete Magnetfelderzeugungsmittel aufweist, welche zur temporären Magnetisierung des Messbands aus ferromagnetischen Material ausgebildet sind.

In vorteilhafter Weise ermöglicht die Sensoreinheit ebenfalls wie die zuvor beschriebene Führungseinheit oder die Adaptervorrichtung eine Reduktion von Verschmutzung. Durch die vorgesehenen Magnetfelderzeugungsmittel ist die Sensoreinheit zum Zusammenwirken mit einem Messband aus ferromagnetischen Material ausgebildet, welches keine Permanentmagnetisierung aufweist.

Auch ein Verschleiß an dem Gehäuse wird durch die Führungsschiene als eine Art auswechselbares Gleitelement verhindert. Zusätzlich ergibt sich der Vorteil, dass bei einem Auswechseln der Führungsschiene die Magnetfelderzeugungsmittel nicht ausgetauscht werden und hier weitere Kosten eingespart werden und auch eine Kalibrierung der Anordnung der Magnetfelderzeugungsmittel nicht notwendig ist.

Mit anderen Worten ist also die erfindungsgemäße Sensoreinheit als teilweise modular aufgebaute Sensoreinheit einsetzbar, wobei kostengünstig herstellbare Bauteile mit hohem Verschleiß, wie die Führungsschiene, leicht austauschbar sind. Hochwertige und teure Bauteile, wie die Sensoreinheit mit Leiterplatten, elektronischen Anschlüssen und Magnetfeldsensoren, sowie auch die in dem Gehäuse aufgenommenen Magnetfelderzeugungsmittel sind vorteilhafterweise möglichst wartungsfrei betreibbar.

In einer bevorzugten Ausführungsform weist die Sensoreinheit wenigstens zwei seitlich der nutförmigen Ausnehmung angeordnete Aufnahmeöffnungen für die Magnetfelderzeugungsmittel auf. Die nutförmige Ausnehmung und/oder der wenigstens zwei Aufnahmeöffnungen sind vorzugsweise analog zu der oben beschriebenen Adaptervorrichtung ausgebildet. Diesbezüglich wird vollumfänglich auf die vorgehende Beschreibung der Adaptervorrichtung verwiesen, deren Merkmale auch für die Sensoreinheit als offenbart und beanspruchbar gelten sollen.

So ist die in einer bevorzugten Ausführungsform der Sensoreinheit die nutförmige Ausnehmung in einer Unterseite des Gehäuses der Sensoreinheit angeordnet. Die wenigstens zwei Aufnahmeöffnungen sind analog zu der zuvor beschriebenen Adaptervorrichtung ebenfalls durch vorzugsweise zweite Vorsprünge und/oder Trennwände abgetrennt.

Vorzugsweise ist das Gehäuse der Sensoreinheit ebenfalls aus Aluminium und vorzugsweise mittels Strangpressverfahren hergestellt. Vorzugsweise besteht das Gehäuse der Sensoreinheit in Längsrichtung aus einem Stück, wobei im Zusammenbau der Sensoreinheit die Magnetfelderzeugungsmittel und die Führungsschiene in das Gehäuse entlang der Längserstreckungsrichtung einschiebbar sind.

Die zweite Ausnehmung der Sensoreinheit und die wenigstens zwei Aufnahmeöffnungen sind endseitig entlang der Längserstreckungsrichtung mit aufsetzbaren Abdeckungen verschließbar, wobei die Abdeckungen vorzugsweise im montierten Zustand der Führungsschiene und der Magnetfelderzeugungsmittel aufgesteckt oder aufgeklippst werden. Die jeweilige Abdeckung kann hierbei auch ein vorzugsweise integral damit ausgebildetes Sicherungselement zur Befestigung an der Sensoreinheit aufweisen, beispielsweise einen selektiv verschiebbaren Riegel.

Die Magnetfelderzeugungsmittel können wenigstens zwei Permanentmagnete, vorzugsweise Stabmagnete unterschiedlicher Polung, oder wenigstens zwei, vorzugsweise eine Vielzahl, elektromagnetischer Spulenmittel als Magnetfelderzeugungsmittel aufweisen. Diese können analog zu den Magnetfelderzeugungsmittel wie oben für die Adaptervorrichtung oder für die Führungseinheit beschrieben angeordnet und/oder ausgebildet sein.

In einem weiteren Aspekt betrifft die Erfindung ein Messsystem aufweisend eine Sensoranordnung oder eine Sensoreinheit, wie zuvor beschrieben, zur Bestimmung der Position eines Fahrkorbs in einem Aufzugschacht mittels Zusammenwirkung wenigstens eines Magnetfeldsensors der Sensoranordnung oder Sensoreinheit mit einer Positionskodierung eines zur Sensoranordnung oder Sensoreinheit relativ beweglichen Messbands. Im Falle der Sensoranordnung umfasst das System weiterhin eine mit der Sensoranordnung selektiv verbindbare erfindungsgemäße Führungseinheit oder einer damit verbindbaren erfindungsgemäße Adaptervorrichtung wie zuvor beschrieben. Weiterhin umfasst das Messsystem ein Messband aus einem ferromagnetischen Material, wobei die Magnetfelderzeugungsmittel der Führungseinheit, der Adaptervorrichtung oder der Sensoreinheit eine temporäre Magnetisierung des Messbands zur Auslesung der Positionskodierung des Messbands durch den wenigstens einen Magnetfeldsensor der Sensoranordnung oder der Sensoreinheit bereitstellen.

Bevorzugt besteht das ferromagnetische Material eines Grundkörpers des Messbands aus Stahl oder Eisen, wobei das Messband als Positionskodierung vorzugsweise gestanzte oder gelochte Aussparungen und/oder Langlöcher, und/oder von diesen wenigstens teilweise umgebene magnetisch unterscheidbare Bereiche im Grundkörper aufweist. Die Aussparungen können mit mechanischen Verformungsmitteln oder mittels Laser eingebracht sein. Das Messband weist vorzugsweise keine Permanentmagnetisierung auf, insbesondere keine Permanentmagnetisierung zur Bereitstellung einer magnetisch auslesbaren Positionskodierung.

Alternativ kann das Messband auch aus einem Textilmaterial ausgebildet sein, wobei die Positionskodierung in Form von einem gewebten Draht oder Faden in das Messband eingenäht oder durch vorzugsweise Ferritpulver auf das Messband aufgedruckt ist.

Weitere zu den bereits oben genannten Vorteilen eines ferromagnetischen Messbands bestehen darin, dass das Messband nicht an magnetisch leitenden Gegenständen im Fahrstuhlschacht anhaftet und zudem unempfindlich gegenüber einer möglichen Entmagnetisierung durch andere starke Permanentmagnete, insbesondere im Fahrstuhlschacht vorgesehene Stockwerksmagnete, ist. Hierdurch werden auch die Anordnungsmöglichkeiten im Fahrstuhlschacht erweitert.

Eine Breite des Messbands beträgt vorzugsweise 8mm bis 20mm, besonders bevorzugt 8mm bis 14mm. Die Länge ist auf den jeweiligen Aufzugsschacht angepasst, in welchem das Messband angeordnet werden soll. Beispielhaft kann das Messband für ein fünfstöckiges Gebäude eine Länge von circa 15m aufweisen.

Die Positionskodierung des Messbands weist vorzugsweise eine Vielzahl von in Längsrichtung des Grundkörpers vorzugsweise aufeinander folgend angeordnete und mittels Magnetsensor magnetisch unterscheidbare Bereiche auf. Die magnetisch unterscheidbaren Bereiche sind vorzugsweise zum jeweiligen Zusammenwirken mit vorzugsweise seitlich des Messbands angeordneten Magnetfelderzeugungsmittel, vorzugsweise unterschiedlicher Polung, ausgebildet. Die magnetisch unterscheidbaren Bereiche umfassen vorzugsweise wenigstens einen ersten Bereich, welcher mit einem dem Messband zugeordneten ersten Magnetfelderzeugungsmitteln (bspw. Nordpol) zur Ausbildung eines ersten Magnetfelds zusammenwirken kann und wenigstens einen zweiten Bereich, welcher mit einem dem Messband zugeordneten zweiten und vorzugsweise anderspoligen Magnetfelderzeugungsmitteln (bspw. Südpol) zur Ausbildung eines zweiten, vom ersten Magnetfeld unterscheidbaren Magnetfelds zusammenwirken kann.

Die magnetisch unterscheidbaren Bereiche können in Längserstreckungsrichtung des Bandes alternierend angeordnet sein. Hierdurch kann insbesondere eine inkrementelle Positionskodierung bereitgestellt werden. Die magnetisch unterscheidbaren Bereiche können in Längserstreckung auch sequentiell oder absolut kodiert angeordnet sein. Hierbei können die jeweiligen Bereiche in Längserstreckungsrichtung in einer vordefinierten Anordnung oder Abfolge vorliegen. Dabei kann insbesondere die jeweilige Erstreckungslänge in Längsrichtung und/oder die jeweilige Bereichsart, d.h. geeignet zur Ausbildung eines ersten oder zweiten Magnetfelds, in Längsrichtung des Messbands variieren oder unregelmäßig ausgebildet sein.

Die magnetisch unterscheidbaren Bereiche sind vorzugsweise jeweils durch spezifisch angeordnete Aussparungen und/oder Langlöcher ausgebildet, und/oder durch diese wenigstens teilweise voneinander getrennt.

Die jeweiligen magnetisch unterscheidbaren Bereiche sind vorzugsweise einer jeweiligen Längsseite des Messbands zum jeweiligen Zusammenwirken mit seitlich des Messbands anordenbaren Magnetfelderzeugungsmittel zugeordnet. Dies bedeutet, dass sich die jeweiligen Bereiche nicht über die komplette Breite des Messbands erstrecken, sondern jeweils näher an einer der beiden Längsseiten des Messbands angeordnet sind. In Draufsicht auf das Messband sind die jeweiligen unterschiedlichen Bereiche in Längsrichtung des Messbands somit vorzugsweise aufeinander folgend und weiterhin vorzugsweise seitlich versetzt zueinander angeordnet.

Vorzugsweise weist der Magnetfeldsensor des Messsystems wenigstens einen, vorzugsweise eine Mehrzahl von in Reihe angeordneter Hall-Sensoren auf, welche parallel zur Verlaufsrichtung oder Längserstreckungsrichtung des Messbands angeordnet sind.

In einem weiteren Aspekt betrifft die Erfindung ein Aufzugsystem mit einem Aufzugschacht und einem darin verfahrbar angeordneten Fahrkorb, aufweisend das zuvor beschriebene Messsystem zur Bestimmung der Position des Fahrkorbs im Aufzugschacht mit einer Sensoranordnung mit der erfindungsgemäßen Führungseinheit oder der erfindungsgemäßen Adaptervorrichtung oder einer erfindungsgemäßen Sensoreinheit, sowie einem Messband.

Weitere Vorteile und Einzelheiten der Erfindung ergeben sich aus der nachfolgenden Beschreibung bevorzugter Ausführungsformen der Erfindung sowie anhand der Zeichnungen.

Es zeigen:
- Fig. 1:: eine schematische Seitenansicht eines bevorzugten Ausführungsbeispiels eines erfindungsgemäßen Aufzugssystems,
- Fig. 2a:: eine Aufsicht auf eine bevorzugte Ausführungsform des Messbands mit zugeordneter erfindungsgemäßer Führungseinheit mit Permanentmagneten,
- Fig. 2b,c: eine Aufsicht auf weitere beispielhafte Ausführungsformen eines Messbands zum Zusammenwirken mit der erfindungsgemäßen Vorrichtung,
- Fig. 3a:: eines perspektivische Seitenansicht des Messbands in einer zugeordneten Führungseinheit,
- Fig. 3b:: eine perspektivische Seitenansicht eines zusätzlichen Jochelements welches an die Führungsschiene anbringbar ist,
- Fig. 3c:: eine perspektivische Ansicht der Führungseinheit mit endseitigen Querschnittserweiterungen,
- Fig. 4a:: eine perspektivische Seitenansicht einer Sensoranordnung des erfindungsgemäßen Messsystems;
- Fig. 4b:: eine perspektivische Ansicht auf eine Sensoranordnung gemäß Fig. 4a,
- Fig. 4c:: eine Schnittansicht einer bevorzugten Ausführungsform des erfindungsgemäßen Messsystems bestehend auf Messband und zugeordneter Sensoranordnung zum Auslesen der Positionskodierung,
- Fig. 5a, 5b:: seitliche Ansichten eines magnetischen Feldlinienverlaufs der Positionskodierung des Messbands beim Abtasten durch die Sensoranordnung,
- Fig. 6:: eine Querschnittsansicht der Sensoranordnung gemäß Fig. 4a in einer x-y Ebene,
- Fig. 7a bis Fig. 7c:: Querschnittsansichten der Sensoranordnung gemäß der Fig. 6 mit einer erfindunsgemäßen Führungseinheit,
- Fig. 8a bis Fig. 8c:: Querschnittsansicht der Sensoranordnung gemäß der Fig. 6 mit einer erfindunsgemäßen Adaptervorrichtung,
- Fig. 9a, Fig. 9b:: Detailansichten der Adaptervorrichtung gemäß der Fig. 8c,
- Fig. 10a, bis Fig. 10d:: Detailansichten auf Ausführungsformen der zweiten Ausnehumg der Adaptervorrichtung gemäß der Fig. 8c,
- Fig. 11a,b:: Querschnittsansichten einer erfindungsgemäßen Sensoreinheit.

In den Figuren sind gleiche Elemente und Elemente mit der gleichen Funktion mit den gleichen Bezugszeichen versehen.

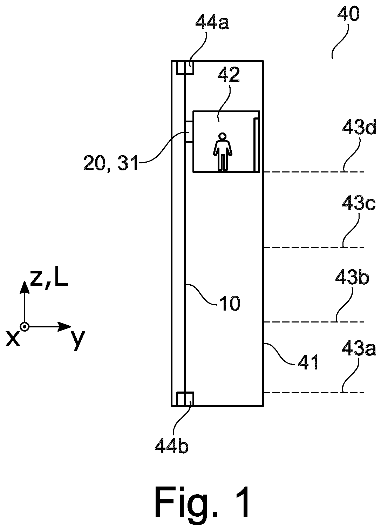

**Fig. 1** zeigt ein Aufzugssystem 40 aufweisend einen sich über mehrere Stockwerke 43a-d, beispielsweise eines Gebäudes, Schiffs, Kranauslegers oder Hochregallagers, erstreckenden Aufzugschacht 41 und einen darin verfahrbar angeordneten Fahrkorb 42. Das System weist zudem an sich bekannte Antriebsmittel (nicht gezeigt) auf, welche ein selektives Verfahren des Fahrkorbs 42 im Aufzugsschacht 41 ermöglichen. Zur Positionserkennung des Fahrkorbs 42 im Aufzugschacht 41, weist das Aufzugssystem 40 ein unten näher beschriebenes erfindungsgemäßes Messsystem 30 auf, welches ein im Aufzugschacht 41 angeordnetes Messband 10 und eine mit diesem zusammenwirkende und am Fahrkorb 42 angeordnete Sensoranordnung 20 oder Sensoreinheit 31 aufweist. Das Messband 10 erstreckt sich vertikal durch den gesamten Aufzugschacht 41 und ist mit Hilfe von vorgesehenen Befestigungsmittel 44a,44b im Aufzugschacht positionssicher gehalten.

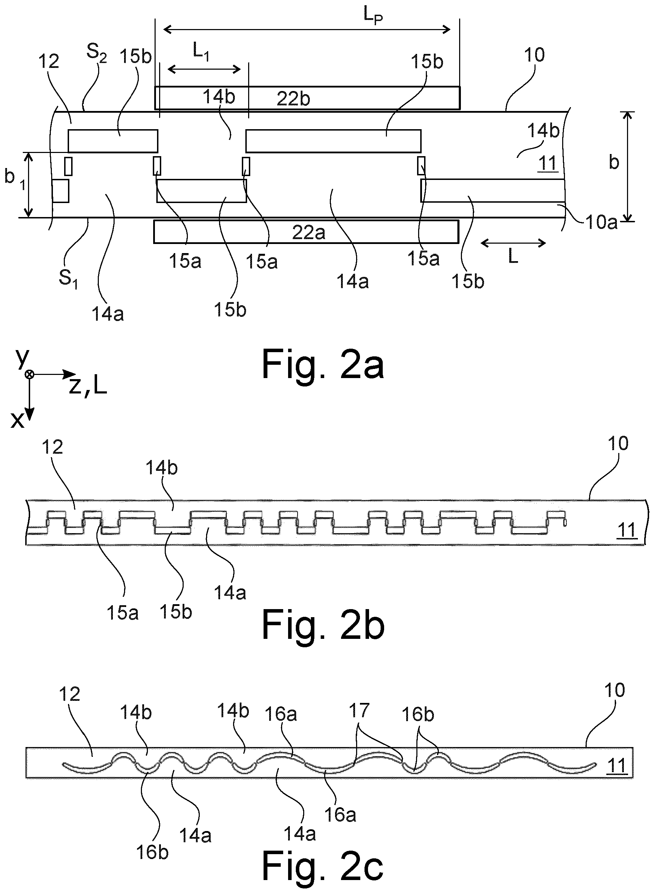

**Fig. 2a** zeigt eine schematische Aufsicht auf eine bevorzugte Ausführungsform des erfindungsgemäßen Messbands 10. Das Messband 10 umfasst einen bandförmigen Grundkörper 11 aus ferromagnetischen Material. Das Messband 10 weist vorzugsweise keine Permanentmagnetisierung, insbesondere zur Bereitstellung einer Positionskodierung, auf.

Das Messband 10 weist vorzugsweise eine homogene Breite b von 8 bis 20mm, mehr bevorzugt von 8 bis 14mm senkrecht zur Längserstreckungsrichtung L des Messbands 10 auf. Die Länge des Messbands 10 ist an die jeweilige Länge des Aufzugschachts 41 angepasst.

Das Messband 10 weist eine Positionskodierung 12 in dem ferromagnetischem Material auf, welche mittels eines Magnetfeldsensors 21 einer dem Band 10 zuordenbaren Sensoranordnung 20 oder Sensoreinheit 31 auslesbar ist. Die Positionskodierung 12 umfasst vorzugsweise im ferromagnetischen Grundkörper 11 des Messbands 10 eingebrachte Aussparungen 15a, 15b oder Durchbrüche. Die Aussparungen 15a, 15b bilden ein vordefiniertes Muster im Grundkörper 11, mit welchem ersten und zweite magnetisch unterscheidbare Bereiche 14a, 14b geformt oder wenigstens teilweise voneinander abgegrenzt sind. Unter magnetisch unterscheidbaren Bereichen wird vorliegend verstanden, dass diese mittels eines zuordenbaren Magnetfeldsensors magnetisch unterscheidbar sind.

Die magnetisch unterscheidbaren Bereiche 14a,14b sind vorzugsweise in Längserstreckungsrichtung L des Grundkörpers 11 in einer vordefinierten Anordnung aufeinander folgend angeordnet und können jeweils eine vordefinierte Erstreckung L₁ in Längsrichtung aufweisen. Die jeweiligen Bereiche 14a, 14b können zudem eine vorzugsweise konstante Breite b₁ senkrecht zur Längserstreckungsrichtung des Grundkörpers 11 aufweisen. Hierdurch kann sich in Draufsicht auf das Messband 10 für den jeweiligen Bereich 14a, 14b eine vorzugsweise quadratische oder rechteckige Fläche ergeben.

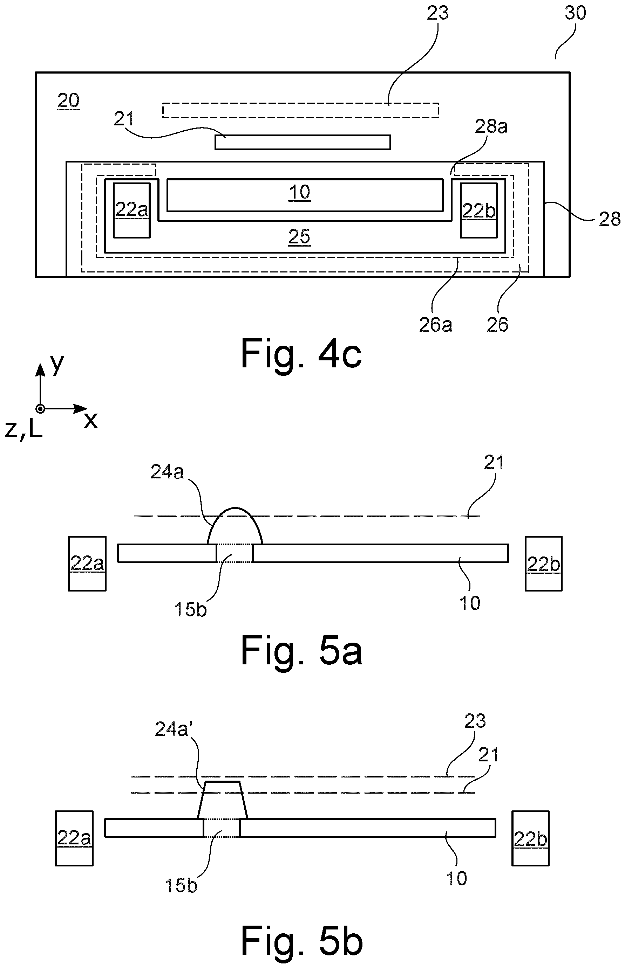

Die magnetisch unterscheidbaren Bereiche 14a,14b sind vorzugsweise zum jeweiligen Zusammenwirken mit seitlich des Messbands 10 angeordneten Magnetfelderzeugungsmittel 22a, 22b unterschiedlicher Polung ausgebildet. Diese Magnetfelderzeugungsmittel, vorliegend als Permanentmagneten 22a, 22b ausgebildet, erstrecken sich dabei in Längserstreckungsrichtung L entlang einer jeweiligen Seitenkante S1, S2 des Messbands 10 über eine vordefinierte Länge. Die ersten Bereiche 14a sind näher an einer Seitenkante S1 des Messbands angeordnet, welche dem Permanentmagneten 22a zugeordnet ist bzw. welche angrenzend an diesen verläuft. Die zweiten Bereiche 14b sind näher an einer Seitenkante S2 des Messbands angeordnet, welche dem Permanentmagneten 22b zugeordnet ist bzw. welche angrenzend an diesen verläuft. Beim Durchlaufen des Messbands 10 durch die beiden stationären Permanentmagnete 22a, 22b werden die ersten Bereiche 14a somit insbesondere durch den ersten Permanentmagneten 22a und die zweiten Bereiche 14b insbesondere durch den zweiten Permanentmagneten 22b temporär magnetisiert. Hierbei wird insbesondere an den die magnetischen Bereiche wenigstens teilweise umgebenden Aussparungen 15b ein Magnetfeld 24a (vgl. Fig. 5a, 5b) in der dritten Dimension ausgebildet, d.h. in einer Richtung senkrecht zur Oberfläche 10a des Messbands 10, welches durch einen zugeordnete Magnetfeldsensor 21 (vgl. Fig. 5a, 5b) ausgelesen werden kann.

Die Permanentmagneten weisen vorzugsweise entlang der Längserstreckungsrichtung L eine Länge Lₚ von 30mm bis 600mm, mehr bevorzugt von 40mm bis 550mm, ganz besonders bevorzugt von 40mm bis 80mm auf.

Insbesondere durch die quer zu der Längserstreckungsrichtung L verlaufenden Aussparungen 15a wird das jeweilige Zusammenwirken der ersten und zweiten Bereiche 14a,14b mit dem jeweils zugeordneten Permanentmagneten 22a, 22b optimiert. Insbesondere können hierbei die jeweiligen Bereiche 14a, 14b von dem jeweils nicht zugeordneten Permanentmagneten 22a, 22b, d.h. mit welchem diese nicht zusammenwirken sollen abgeschirmt werden.

Alternativ zur vorgenannten Ausführungsform kann das ferromagnetische Material auf eine Oberfläche 10a des Messbands 10 gedruckt oder durch ferromagnetische Fäden auch in einen Textilgrundkörper 11 eingewebt sein. Beispielsweise kann das ferromagnetische Material als Ferritpulver zur Ausbildung von entsprechenden ersten und zweiten Bereiche 14a,14b aufgedruckt werden.

**Fig. 2b** und **2c** zeigen jeweils eine Draufsicht auf eine exemplarische Ausbildung eines Messbands 10 aus ferromagnetischen Material, in welchem die jeweilige Positionskodierung 12 aufweisend spezifisch angeordnete und/oder ausgebildete Aussparungen realisiert ist. Die Ausbildung der Positionskodierung gemäß Fig. 2b entspricht hierbei der in Fig. 2a bereits gezeigten Anordnung, in welchem die Positionskodierung 12 seitlich versetzte rechteckige Längsöffnungen 15b und im Wesentlichen mittig dazu angeordnete rechteckige Queröffnungen 15a umfasst. In der Ausbildung gemäß Fig. 2c umfasst die Positionskodierung 12 seitlich versetzte bogenförmige Aussparungen 16a,16b unterschiedlicher Länge und Krümmung, welche jeweils durch einen Verbindungssteg 17 in Längsrichtung voneinander getrennt angeordnet sind. Die jeweiligen bogenförmige Aussparungen 16a,16b können alternativ auch durch zueinander angewinkelte lineare Ausnehmungen gebildet sein (nicht gezeigt). Dies bedeutet, dass die jeweilige bogenförmige Aussparung 16a,16b durch zwei vorzugsweise gleich lange Ausnehmungen gebildet ist, welche mittig mit einem Winkel zueinander angeordnet sind. Hierdurch kann die gezeigte bogenförmige Ausgestaltung näherungsweise ausgebildet werden.

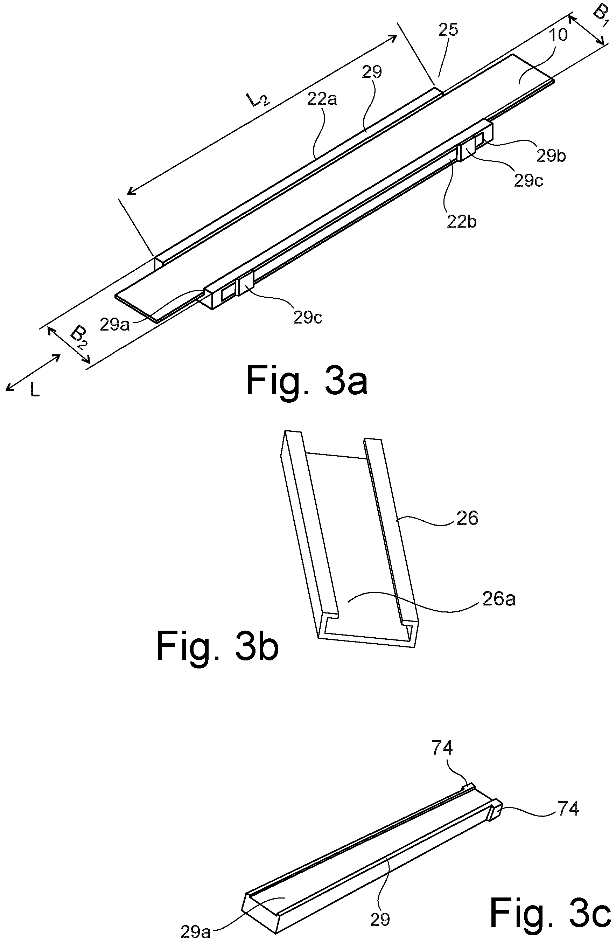

Fig. 3a zeigt eine Einzeldarstellung einer erfindungsgemäßen Führungseinheit 25 des Messsystems 30 (vgl. Fig. 4c), welche dem Messband 10 zugeordnet ist. Die Führungseinheit 25 weist eine Führungsschiene 29 als ein Art Gleitelement auf, die längsseits rechts und links entlang einer Führungsnut 29a eine längliche Vertiefung 29b aufweist, in welcher jeweils ein Permanentmagnet 22a, 22b unterschiedlicher Polung eingelegt ist, Nord auf der einen und Süd auf der anderen Seite der Führungsschiene 29. Damit wird erreicht, dass sich der jeweilige Messbandabschnitt, der sich innerhalb der Führungseinheit 25 befindet wie oben beschrieben magnetisiert wird. Die Vertiefung 29b weist eine vorzugsweise rechtwinklige Kontur auf, um vorzugsweise ebenfalls rechtwinklige und/oder abgerundete Permanentmagnete 22a, 22b aufzunehmen. Zwischen den jeweiligen Permanentmagneten 22a, 22b und der Führungsnut 29a können zusätzlich Flussverstärkungsmittel (nicht dargestellt) vorgesehen sein. Diese können beispielsweise längliche Stahlelemente umfassen, welche parallel zum jeweiligen Magneten 22a, 22b und der Führungsnut 29a verlaufen und einen im Wesentlichen dreieckigen Querschnitt aufweisen. Hierdurch kann ein magnetischer Fluss von dem jeweiligen Magneten hin zur Führungsnut 29a konzentriert werden. Des Weiteren kann vorgesehen sein, dass die Permanentmagnete 22a, 22b zur Fixierung in der jeweiligen Vertiefung 29b mit zumindest einem ersten Verriegelungselement 29c abgedeckt oder selektiv abdeckbar und somit verriegelbar sind.

Besonders bevorzugt weist die Führungseinheit 25 eine Länge L₂ von 100mm bis 700mm, mehr bevorzugt von 250mm bis 550mm, und/oder eine Breite B₂ von 8mm bis 25mm, besonders bevorzugt von 10mm bis 15mm auf. Vorzugsweise weist die nutförmige Vertiefung 29a eine Breite B₁ von 10mm bis 15mm auf, um das Messband 10 darin zu führen.

Fig. 3b zeigt ein Jochelement 26, welches zur Aufnahme der Führungseinheit 25 dienen kann. Dieses weist eine auf die Außenmaße der Führungseinheit 25 angepasste längliche Vertiefung 26a auf. Das Jochelement weist vorzugsweise einen im Wesentlichen C-förmigen Querschnitt auf. Das Jochelement 26 ist aus Metall geformt und dient vorzugsweise zum Kurzschließen der beiden Permanentmagnete 22a, 22b der Führungseinheit 25. Hierdurch wird eine Konzentration des Magnetflusses erzielt, wodurch eine weiter optimierte Ausbildung der temporären Magnetfelder bei Durchlaufen des Messbands 10 in der Führungseinheit 25 ermöglicht wird.

**Fig. 3c** zeigt die Führungsschiene 29 mit einer endseitigen und seitlichen Querschnittserweiterung 74 quer zu der Längserstreckungsrichtung L. Mit dieser Querschnittserweiterung 74 kann im montierten Zustand der Führungseinheit 25 mit der Sensoranordnung 20 ein Anschlag ausgebildet werden, um die Führungseinheit 25 in Längserstreckungsrichtung L zu fixieren.

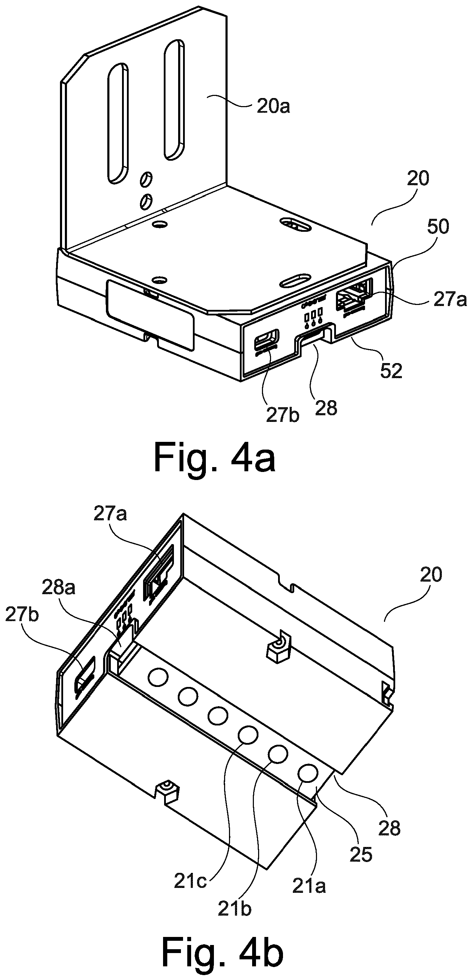

**Fig. 4a,4b** zeigen eine an sich bekannte Sensoranordnung 20 zum Zusammenwirken mit dem Messband 10 und der erfindungsgemäßen Führungseinheit 25. Die Sensoranordnung 20 ist zur positionssicheren Anordnung an einem Fahrkorb 42 eines Aufzugsystems 40 ausgebildet und weist hierfür entsprechende Positioniermittel 20a auf, beispielsweise eine an sich bekannte Montagevorrichtung mit integrierten Verstellmitteln. Zur Einbindung der Sensoranordnung 20 in eine Aufzugssteuerung weist diese Anschlussmöglichkeiten 27a, 27b auf.

Die Sensoranordnung 20 umfasst zudem eine längliche erste nutförmige Ausnehmung 28 in einem Gehäuse 50, vorzugsweise auf einer Unterseite 52 der Sensoranordnung 20 oder des Gehäuses 50, in welcher die zuvor beschriebene Führungseinheit 25 aufnehmbar bzw. einsetzbar ist. Ein vorzugsweise in der Führungsnut 29a der Führungsschiene 29 verlaufendes Messband 10 verläuft zwischen einer nach unten gerichteten Oberfläche 28a der ersten Ausnehmung 28 und der Führungsnut 29a der Führungsschiene 29 und ist somit sandwichartig zwischen den vorgenannten Komponenten angeordnet. Der entsprechende Abstand zwischen Oberfläche 28a und Führungsnut 29a ist derart gewählt, dass das Messband 10 in der dadurch erzeugten Öffnung im Wesentlichen widerstandsfrei gleiten kann.

Auf der zum Messband 10 gerichteten Oberfläche 28a weist die Sensoranordnung 20 wenigstens einen Magnetfeldsensor 21 auf. Dieser umfasst vorzugsweise eine Mehrzahl von in Reihe angeordneter Hall-Sensoren 21a, 21b, 21c, welche zum Auslesen des Messbands 10 ausgebildet sind und parallel zur Verlaufsrichtung des Messbands 10 ausgerichtet sind.

**Fig. 4c** zeigt eine zugehörige Schnittansicht des erfindungsgemäßen Messsystems 30 aufweisend die Sensoranordnung 20 und das darin eingelegte Messband 10. Wie in der Figur gezeigt, kann zur Optimierung des Magnetflusses ein die Führungseinheit 25 umgebendes Jochelement 26 wie oben beschrieben vorgesehen sein. Alternativ oder zusätzlich kann die Sensoranordnung 20 einen Flussverstärker 23 aufweisen, welcher zur Konzentration eines vom Messband 10 abgegebenen Magnetfelds ausgebildet bzw. angeordnet ist. Der Flussverstärker 23 umfasst vorzugsweise ein metallisches Element mit homogenem Querschnitt, welches sich parallel zur Verlaufsrichtung L des Messbands 10 erstreckt und auf einer vom Messband 10 abgewandten Seite des Magnetfeldsensors 21 angeordnet ist.

Durch den oberhalb bzw. rückseitig des Magnetfeldsensors 21 angeordneten Flussverstärker 23 wird gegenüber der Anordnung ohne Flussverstärker (vgl. **Fig. 5a**) eine optimierte Ausrichtung bzw. Konzentration des jeweils von den unterschiedlichen Bereichen 14a,14b des Messbands 10 erzeugten hier lediglich schematisch dargestellten Magnetfelds 24a' derart erzielt, dass der Fluss im Wesentlichen orthogonal durch den Magnetfeldsensor 21 bzw. durch die jeweiligen Hall-Elemente 21a, 21b, 21c fließt und so ein stärkerer Magnetfluss mit weniger Streuung entsteht (vgl. **Fig. 5b**). Hierdurch wird die Auslesung der Positionskodierung 12 optimiert. Zusätzlich kann hierdurch der Abstand zwischen Messband 10 und Magnetfeldsensor 21 vergrößert werden, wodurch die Auslegung des Systems insbesondere hinsichtlich notwendiger Toleranzen vereinfacht wird.

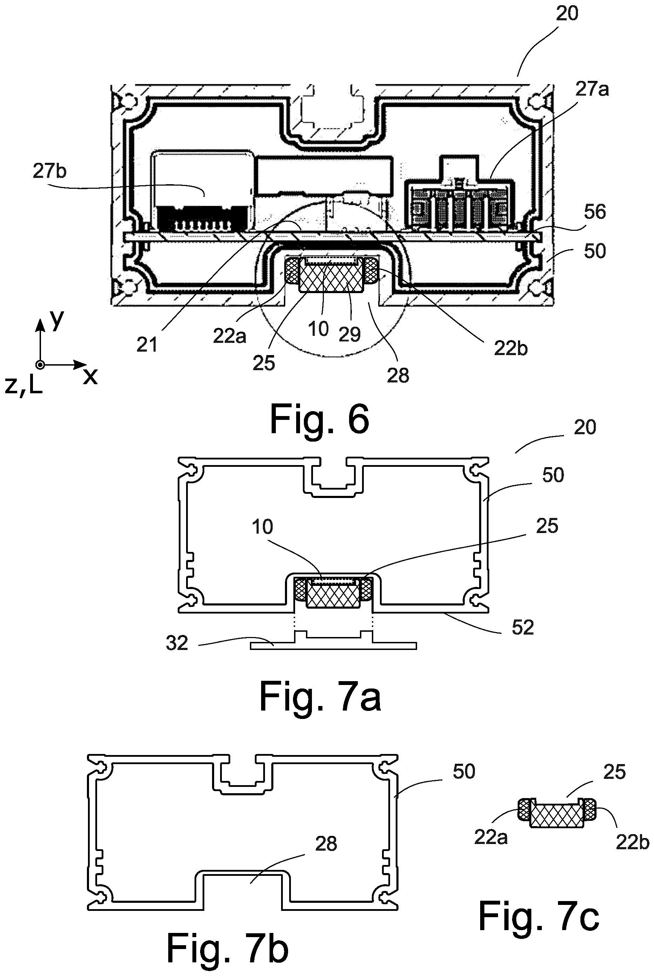

In **Fig. 6** ist die Sensoranordnung 20 mit der Führungseinheit 25 in einem montierten und eingesetzten Zustand in die erste nutförmige Ausnehmung 28 dargestellt. Im Inneren des Gehäuses 50 sind die Magnetfeldsensoren 21 und elektronischen Anschlussmöglichkeiten 27a, 27b der Sensoranordnung 20 schematisch auf einer Leiterplatte 56 oder einem printed circuit board (PCB) dargestellt. Bei der Sensoranordnung 20 handelt es sich vorzugsweise um eine aus dem Stand der Technik bereits bekannte Sensoranordnung, wobei die erfindungsgemäße Führungseinheit 25 in die bestehende erste Ausnehmung 28 einsetzbar ist.

Die **Fig. 7a** bis **Fig. 7c** zeigen die Sensoranordnung 20 mit dem Gehäuse 50 und die Führungseinheit 25. Zur Fixierung der Führungseinheit 25 in der ersten nutförmigen Ausnehmung 28 ist im montierten Zustand bevorzugt zumindest ein zweites Verriegelungselement 32 an der Unterseite 52 des Gehäuses 50 angeordnet. Das zumindest eine zweite Verriegelungselement 32 ist vorzugsweise an das Gehäuse 50 verschraubt oder geklippt.

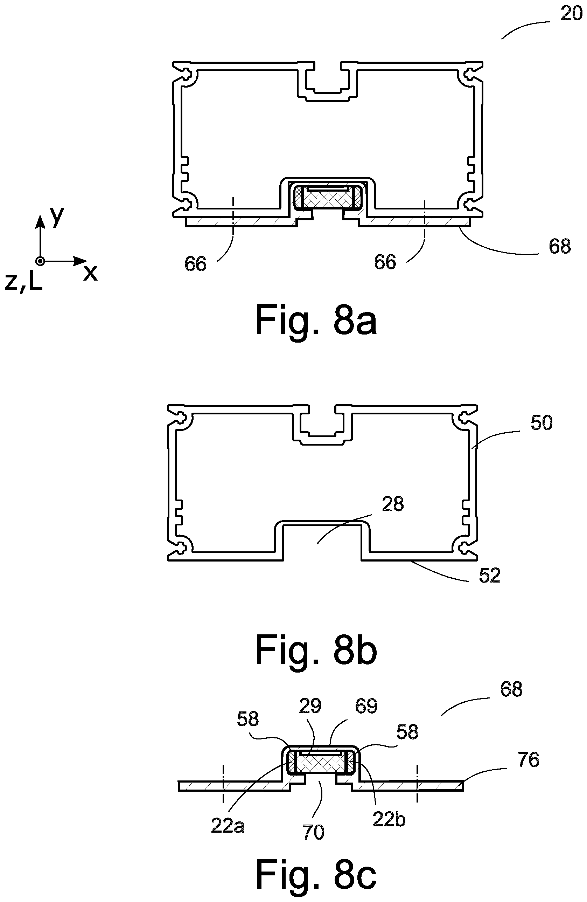

Die **Fig. 8a** bis **Fig. 8c** zeigen die Sensoranordnung 20 mit dem Gehäuse 50 und eine bevorzugte Ausführungsform der erfindungsgemäßen Adaptervorrichtung 68, die analog zu der bereits beschriebenen Führungseinheit 25 in der ersten nutförmigen Ausnehmung 28 der Sensoranordnung 20 montierbar ist. Die Adaptervorrichtung 68 besteht vorzugsweise aus einer Adapterplatte 76 aufweisend eine U-förmige Profilierung 69, wobei im montierten Zustand der Adaptervorrichtung 68 die Adapterplatte 76 auf der Unterseite 52 und die U-förmige Profilierung 69 innerhalb der ersten nutförmigen Ausnehmung 28 des Gehäuses 50 anliegt. Vorzugsweise weist die Adaptervorrichtung 68 Verbindungsmittel 66, insbesondere eine Schraubverbindung oder Klippverbindung auf, um die Adapterplatte 76 mit dem Gehäuse 50 der Sensoranordnung zu verbinden.

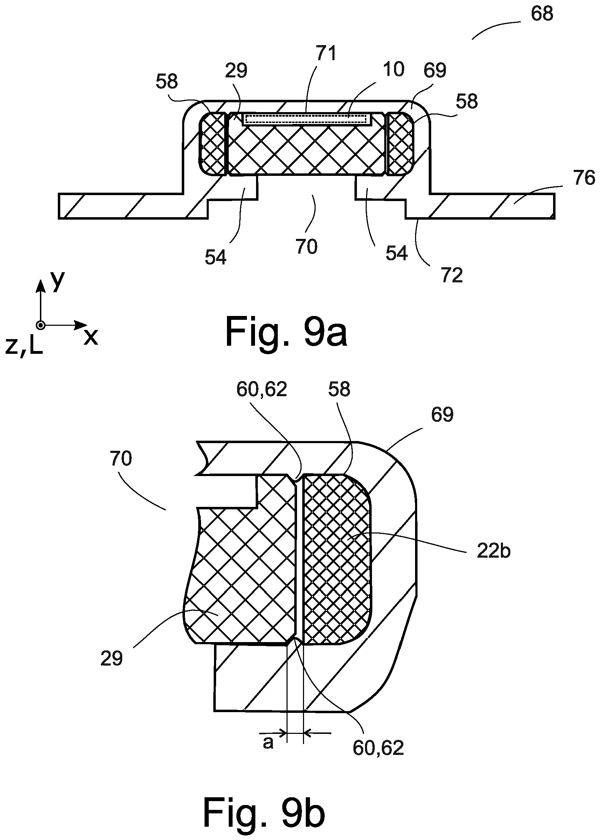

In der **Fig. 9a** und **Fig. 9b** ist die U-förmige Profilierung 69 im Detail dargestellt, wobei innerhalb dieser Profilierung 69 eine zweite nutförmige Ausnehmung 70 zur Aufnahme einer Führungsschiene 29 entlang der Längserstreckungsrichtung L und zwei seitliche Aufnahmeöffnungen 58 zur Aufnahme von Magnetfelderzeugungsmitteln, im vorliegenden Fall zweier Permanentmagnete 22a, 22b ausgebildet sind. Im Unterschied zu bereits beschriebenen Führungseinheit 25 sind hierbei die zwei seitlichen Permanentmagnete 22a, 22b separat angeordnet und nicht integral mit einer Führungsschiene 29 verbunden. Des Weiteren ist ein Messband 10 im montierten Zustand innerhalb der zweiten Ausnehmung 70 der Adaptervorrichtung 68 angeordnet, wobei das Messband 10 durch die Führungsschiene 29 und bevorzugt beabstandet zu einer Führungsfläche 71 innerhalb der zweiten Ausnehmung 70 geführt ist. Dadurch muss bei einem Verschleiß an der Führungsschiene 29 lediglich diese und nicht auch die Permanentmagneten 22a, 22b ausgetauscht werden.

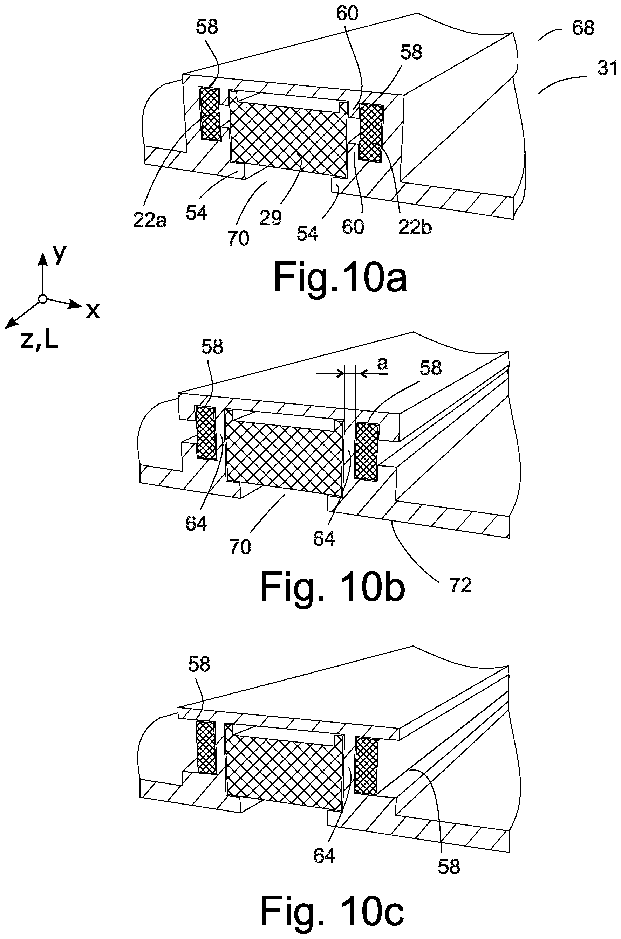

In den **Fig. 9a, Fig. 9b****,** sowie **Fig. 10a** bis **Fig. 10c** ist die zweite Ausnehmung 70 in verschiedenen Ausführungsformen dargestellt, wobei vorzugsweise zwei seitliche erste Vorsprünge 54 in einer Unterseite 72 entlang einer Raumachse x ausgebildet sind, um die zweite Ausnehmung 70 teilweise zu schließen und die Führungsschiene 29 im montierten Zustand formschlüssig zu fixieren. Dabei ist die Führungsschiene 29 vorzugsweise entlang der Längserstreckungsrichtung L parallel zu einer Raumachse z in die zweite Ausnehmung 70 zur Montage einschiebbar.

Die seitlichen Aufnahmeöffnungen 58 sind vorzugsweise durch zweite Vorsprünge 60 oder Trennwände 64 entlang einer Raumachse y von der zweiten Ausnehmung 70 abgetrennt, um die wenigstens zwei Permanentmagnete 22a, 22b formschlüssig und entlang der Längserstreckungsrichtung L einsteckbar aufzunehmen.

Ein Abstand a zwischen den seitlichen Aufnahmeöffnungen 58 und der zweiten nutförmigen Ausnehmung 70, insbesondere eine Breite der zweiten Vorsprünge 60 oder der Trennwände 64 beträgt vorzugsweise zwischen 0,5mm bis 2,5mm, mehr bevorzugt 1mm bis 2mm.

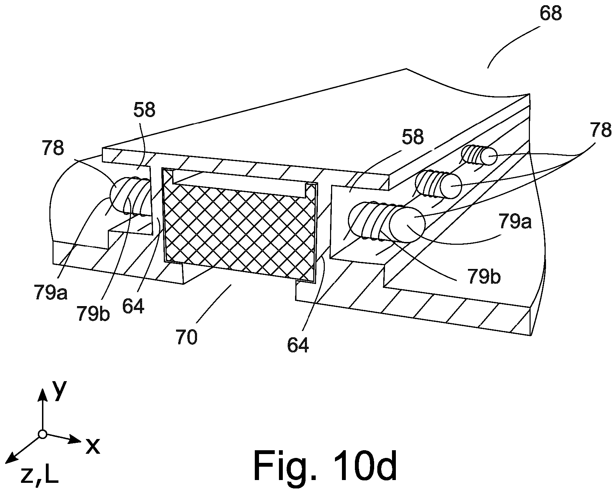

Vorzugsweise kann nach der Fig. 10c die Aufnahmeöffnung 58 seitlich auch geöffnet sein, um Magneterzeugungsmittel unterschiedlicher Größe aufnehmen zu können (siehe auch Fig. 10d).

In der **Fig. 9a** und der **Fig. 9b** sind die zweiten Vorsprünge 60 als Art Trennnasen 62 ausgebildet, um einen möglichst kleinen Abstand a zwischen den Permanentmagneten 22a, 22b und der Führungsschiene 26 zu erreichen, insbesondere von ca. 1mm. Diese Ausführungsform ist besonders für eine Adaptervorrichtung 68 geeignet, um als Nachrüstlösung einer bestehenden Sensoranordnung 20 aus dem Stand der Technik die Permanentmagnete 22a, 22b in einen vorgegebenen Bauraum zusätzlich zu der Führungsschiene 29 anordnen zu können.

**Fig. 10d** zeigt eine Querschnittsansicht einer weiteren erfindungsgemäßen Ausführungsform der Adaptervorrichtung, in welcher die Magnetfelderzeugungsmittel elektromagnetische Spulenmittel 78 umfassen. Die Spulenmittel sind hierbei vorzugsweise beidseits der nutförmigen zweiten Ausnehmung 70 angeordnet und zur Ausbildung eines temporären Magnetfelds mittels eines anlegbaren Ansteuersignals ausgebildet. Die Spulenmittel weisen hierbei jeweils einen Kernbereich 79a und eine mantelseitig vorgesehene Spulenwicklung 79b auf. Die jeweiligen Spulenmittel 78 sind durch eine zugeordnete Steuereinheit (nicht dargestellt) vorzugsweise derart ansteuerbar ausgebildet, dass sich auf den beiden gegenüberliegenden Seiten der nutförmigen Ausnehmung ein temporäres Magnetfeld mit gegensätzlicher Polausrichtung ausbilden lässt.

Hierbei sind in Längsrichtung der nutförmigen Ausnehmung 78 beidseits jeweils eine Mehrzahl von Spulenmitteln 23 jeweils gegenüberliegend in Reihe angeordnet.

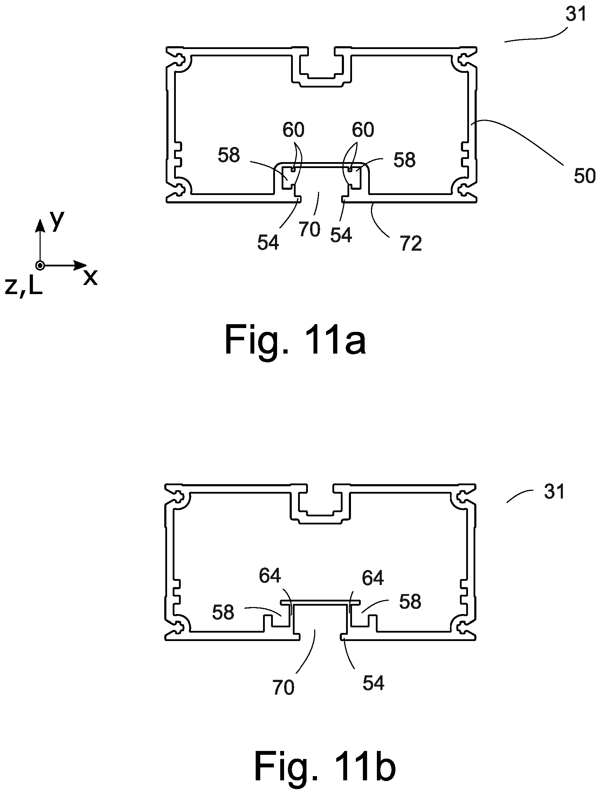

In **Fig. 11a** und **Fig. 11b** ist eine bevorzugte Ausführungsform der erfindungsgemäßen Sensoreinheit 31 dargestellt, die im Unterschied zu der bereits beschriebenen Sensoranordnung 20 eine nutförmige Ausnehmung 70 mit zwei seitlichen Aufnahmeöffnungen 58 aufweist. Diese ist vorzugsweise analog zur oben beschriebenen nutförmigen Ausbildung der Adaptervorrichtung 68 ausgebildet. Mit anderen Worten ist also die bereits beschriebene Adaptervorrichtung 68 innerhalb des Gehäuses 50 der Sensoreinheit 31 bereits integriert bzw. als integraler Gehäusebestandteil ausgebildet, wobei die nutförmige Ausnehmung 70 ebenfalls zur Aufnahme einer Führungsschiene 29 als Gleitelement für das Messband und die zwei seitlichen Aufnahmeöffnungen 58 zur Aufnahme von Magnetfelderzeugungsmitteln 22a, 22b,78 seitlich zur Führungsschiene 29 ausgebildet sind.

Die Sensoreinheit 31 weist analog zur erfindungsgemäßen Adaptervorrichtung 68 vorzugsweise ebenfalls seitliche erste Vorsprünge 54 innerhalb der nutförmigen Ausnehmung 70 auf, um die Führungsschiene 29 zu lagern.

Die seitlichen Aufnahmeöffnungen 58 sind ebenfalls analog zu der Adaptervorrichtung 68 vorzugsweise durch zweite Vorsprünge 60 oder Trennwände 64 entlang einer Raumachse y von der nutförmigen Ausnehmung 70 abgetrennt.

Fig. 11a und Fig. 11b zeigen hierbei lediglich das Gehäuse der erfindungsgemäßen Sensoreinheit 31. Bezüglich der von der Sensoreinheit 31 weiter umfassten Komponenten, insbesondere auch des Magnetfeldsensors 21, sei auf die vorhergehende Beschreibung der Sensoranordnung 20 verwiesen. Hinsichtlich der spezifischen Ausbildung der Unterseite der Sensoreinheit 31 sei zudem auf die vorhergehenden Ausführungen zu Fig. 10a-d verwiesen, welche analog in der Sensoreinheit 31 als Gehäuseteil integral ausgebildet sein können.

### Bezugszeichenliste

- 10: Messband
- 11: bandförmiger Grundkörper
- 12: Positionskodierung
- 14a, 14b: magnetisch unterscheidbare Bereiche
- 15a, 15b: Aussparungen (rechteckige Läng- und Queröffnungen)
- 16a,16b: Aussparungen (bogenförmig)
- 17: Verbindungssteg
- 20: Sensoranordnung
- 21: Magnetfeldsensors
- 21a-21c: Hall-Sensoren/Elemente
- 22a, 22b: Magnetfelderzeugungsmittel (Permanentmagneten)
- 24a: Magnetfeld
- 24a': Magnetfeld mit Flussverstärker
- 23: Flussverstärker
- 25: Führungseinheit
- 26: Jochelement
- 26a: längliche Vertiefung des Jochelements
- 27a, 27b: elektronische Anschlussmöglichkeiten
- 28: erste Ausnehmung
- 29: Führungsschiene
- 29a: Führungsnut
- 29b: längliche Vertiefung der Führungsschiene
- 29c: erstes Verriegelungselementen
- 30: Messsystem
- 31: Sensoreinheit
- 32: zweites Verriegelungselement
- 40: Aufzugssystem
- 41: Aufzugsschacht
- 42: Fahrkorb
- 43a-d: Stockwerke
- 44a, 44b: Befestigungsmittel
- 50: Gehäuse
- 52: Unterseite des Gehäuses
- 54: erste Vorsprünge
- 56: Leiterplatte
- 58: Aufnahmeöffnungen
- 60: zweite Vorsprünge
- 62: Trennnasen
- 64: Trennwände
- 66: Verbindungsstelle
- 68: Adaptervorrichtung
- 69: U-förmige Profilierung der Adaptervorrichtung
- 70: zweite (nutförmige) Ausnehmung
- 71: Führungsfläche der zweiten Ausnehmung
- 72: Unterseite der Adaptervorrichtung/Sensoreinheit
- 74: Anschlagsmittel (Querschnittserweiterung)
- 76: Adapterplatte
- 78: Spulenmittel (Spuleneinheit)
- 79a: Kernbereich
- 79b: Spulenwicklung

- a: Abstand zw. Führungsschiene und Permanentmagnet
- b: Breite Messband
- b₁: Breite magnetischer Bereich
- B₁: Breite Vertiefung Führungseinheit
- B₂: Breite Führungseinheit
- L: Längserstreckungsrichtung
- L₁: Erstreckung magnetisch wirksame Bereiche im Messband
- L₂: Länge der Führungseinheit
- L_{P}: Länge Permanentmagneten
- S1,S2: Seitenkanten des Messbands

- x,y,z: Raumachsen eines kartesischen Koordinatensystems

## Patentansprüche

1. Führungseinheit (25) für eine Sensoranordnung (20) zur Bestimmung der Position eines Fahrkorbs (42) in einem Aufzugschacht (41) mittels Zusammenwirkung wenigstens eines Magnetfeldsensors (21) der Sensoranordnung (20) mit einer Positionskodierung eines zur Sensoranordnung (20) relativ beweglichen Messbands (10), wobei die Führungseinheit (25) zum Zusammenwirken mit einer nutförmigen ersten Ausnehmung (28) eines Gehäuses (50) der Sensoranordnung (20) und zur Führung des Messbands (10) entlang des wenigstens einen Magnetfeldsensors (21) ausgebildet ist, **dadurch gekennzeichnet, dass** die Führungseinheit (25) Magnetfelderzeugungsmittel (22a, 22b,78) zur temporären Magnetisierung eines in der Führungseinheit (25) entlang einer Längserstreckungsrichtung (L) geführten Messbands (10) aus ferromagnetischen Material aufweist.

2. Führungseinheit nach Anspruch 1,
**dadurch gekennzeichnet, dass** die Magnetfelderzeugungsmittel (22a, 22b,78) derart angeordnet sind, dass die Positionskodierung (12) des Messbands (10), vorzugsweise umfassend spezifisch angeordnete und/oder spezifisch ausgebildete Aussparungen (15a, 15b) in einem ferromagnetischen Grundkörper (11) des Messbands (10), von dem wenigstens einen Magnetfeldsensor (21) der Sensoranordnung (20) auslesbar oder abtastbar ist.

3. Führungseinheit nach Anspruch 1 oder 2,
**dadurch gekennzeichnet, dass** die Magnetfelderzeugungsmittel wenigstens zwei Permanentmagnete (22a, 22b) unterschiedlicher Polung aufweisen, welche seitlich zur Längserstreckungsrichtung (L), insbesondere form- und/oder stoffschlüssig und bevorzugt in seitlichen Vertiefungen (29b) der Führungseinheit angeordnet sind.

4. Führungseinheit nach einem der Ansprüche 1 bis 3,
**dadurch gekennzeichnet,**
**dass** die Führungseinheit (25) Anschlagsmittel (74) in Form einer endseitigen Querschnittserweiterung aufweisen, zur Ausbildung eines vorzugsweise formschlüssigen Anschlags in Längserstreckungsrichtung (L) im montierten Zustand mit der Sensoranordnung (20).

5. Führungseinheit nach einem der Ansprüche 1 bis 4,
**dadurch gekennzeichnet,**
**dass** die Führungseinheit (25) aus einem Kunststoffmaterial, insbesondere einem reibungsarmen und verschleißarmen Kunststoff, vorzugsweise PTFE, besteht.

6. Führungseinheit nach einem der Ansprüche 1 bis 5,
**dadurch gekennzeichnet,**
**dass** die Führungseinheit (25) eine Länge (L₂) von 100mm bis 700mm, vorzugsweise von 250 bis 550mm, und/oder eine Breite (B₂) von 8mm bis 20mm, vorzugsweise von 10mm bis 15mm, aufweist.

7. Adaptervorrichtung, insbesondere Adapterplatte, zur vorzugsweise bodenseitigen Anbringung an ein Gehäuse (50) einer Sensoranordnung (20) zur Bestimmung der Position eines Fahrkorbs (42) in einem Aufzugschacht (41) mittels Zusammenwirkung wenigstens eines Magnetfeldsensors (21) der Sensoranordnung (20) mit einer Positionskodierung (12) eines zur Sensoranordnung (20) relativ beweglichen Messbands (10), wobei die Adaptervorrichtung (68) zum Zusammenwirken mit einer nutförmigen ersten Ausnehmung (28) des Gehäuses (50) der Sensoranordnung (20) ausgebildet ist, **dadurch gekennzeichnet dass**
die Adaptervorrichtung (68) eine nutförmige zweite Ausnehmung (70) aufweist, welche zur Aufnahme eines Messbands (10) aus ferromagnetischen Material sowie zur Aufnahme einer Führungsschiene (29) für das Messband (10) ausgebildet ist, derart, dass das Messband (10) entlang des wenigstens einen Magnetfeldsensors (21) der Sensoranordnung (20) geführt ist, wobei die Adaptervorrichtung (68) seitlich einer Längserstreckungsrichtung (L) der nutförmigen zweiten Ausnehmung (70) angeordnete Magnetfelderzeugungsmittel (22a, 22b, 78) aufweist, welche zur temporären Magnetisierung des Messbands (10) aus ferromagnetischen Material ausgebildet sind.

8. Adaptervorrichtung nach Anspruch 7,
**dadurch gekennzeichnet,**
**dass** die Adaptervorrichtung (68) eine vorzugsweise im Wesentlichen U-förmige Profilierung (69) aufweist, welche zum Eingriff in die nutförmige erste Ausnehmung (28) des Gehäuses (50) der Sensoranordnung (20) ausgebildet ist, derart, dass die nutförmige zweite Ausnehmung (70) der Adaptervorrichtung (68) im Wesentlichen parallel zur ersten Ausnehmung (28) des Gehäuses (50) angeordnet ist.

9. Adaptervorrichtung nach Anspruch 7 oder 8,
**dadurch gekennzeichnet,**
**dass** die zweite nutförmige Ausnehmung (70) in einer Unterseite (52) der Adaptervorrichtung (68) angeordnet oder ausgebildet ist, wobei erste Vorsprünge (54) entlang der Unterseite (52) ausgebildet sind, um die nutförmige zweite Ausnehmung (70) zumindest teilweise quer zur Längserstreckungsrichtung (L) zur formschlüssigen Aufnahme der Führungsschiene (29) zu schließen.

10. Adaptervorrichtung nach Anspruch 7 bis 9,
**dadurch gekennzeichnet,**
**dass** die Adaptervorrichtung zwei seitliche Aufnahmeöffnungen (58) zur Aufnahme von Permanentmagneten (22a, 22b) unterschiedlicher Polung als Magnetfelderzeugungsmittel aufweist, welche vorzugsweise durch zweite Vorsprünge (60) und/oder durch Trennwände (64) von der nutförmigen Ausnehmung (70) für die Führungsschiene (29) abgetrennt sind.

11. Adaptervorrichtung nach Anspruch 7 bis 9,
**dadurch gekennzeichnet,**
**dass** die Adaptervorrichtung wenigstens zwei, vorzugsweise eine Vielzahl, seitlich der Längserstreckungsrichtung angeordnete elektromagnetische Spulenmittel (78) als Magnetfelderzeugungsmittel aufweist, welche jeweils zur Ausbildung eines temporären Magnetfelds mittels eines anlegbaren Ansteuersignals ausgebildet sind.

12. Sensoreinheit (31) zur Bestimmung der Position eines Fahrkorbs (42) in einem Aufzugschacht (41) mittels Zusammenwirkung wenigstens eines Magnetfeldsensors (21) der Sensoreinheit (31) mit einer Positionskodierung (12) eines zur Sensoreinheit (31) relativ beweglichen Messbands (10), wobei ein Gehäuse (50) der Sensoreinheit (31) eine nutförmige Ausnehmung (70) zur Führung des Messbands (10) aufweist, wobei die Sensoreinheit (31) eine in der nutförmigen Ausnehmung (70) vorzugsweise auswechselbar angeordnete Führungsschiene (29) zur Führung des Messbands (10) entlang des wenigstens einen Magnetfeldsensors (21) aufweist, **dadurch gekennzeichnet, dass** die Sensoreinheit (31) vorzugsweise seitlich einer Längserstreckungsrichtung (L) der nutförmigen Ausnehmung (70) angeordnete Magnetfelderzeugungsmittel (22a, 22b, 78) aufweist, welche zur temporären Magnetisierung des Messbands (10) aus ferromagnetischen Material ausgebildet sind.

13. Sensoreinheit nach Anspruch 12,
**dadurch gekennzeichnet, dass** die Magnetfelderzeugungsmittel wenigstens zwei Permanentmagnete (22a,22b), vorzugsweise Stabmagnete unterschiedlicher Polung, oder wenigstens zwei, vorzugsweise eine Vielzahl, elektromagnetischer Spulenmittel (78) als Magnetfelderzeugungsmittel aufweist.

14. Messsystem aufweisend eine Sensoranordnung (20) oder eine Sensoreinheit (31) nach Anspruch 12 oder 13 zur Bestimmung der Position eines Fahrkorbs (42) in einem Aufzugschacht (41) mittels Zusammenwirkung wenigstens eines Magnetfeldsensors (21) der Sensoranordnung oder Sensoreinheit (20, 31) mit einer Positionskodierung (12) eines zur Sensoranordnung oder Sensoreinheit (20, 31) relativ beweglichen Messbands (10), sowie eine mit der Sensoranordnung (20) selektiv verbindbare Führungseinheit (25) gemäß einem der Ansprüche 1 bis 6 oder einer damit verbindbaren Adaptervorrichtung nach einem der Ansprüche 7 bis 11, und einem Messband (10) aus einem ferromagnetischen Material, wobei die Magnetfelderzeugungsmittel (22a, 22b, 78) der Führungseinheit (25), der Adaptervorrichtung (68) oder der Sensoreinheit (31) ausgebildet sind, eine temporäre Magnetisierung des Messbands (10) zur Auslesung der Positionskodierung (12) des Messbands (10) durch den wenigstens einen Magnetfeldsensor (21) der Sensoranordnung oder Sensoreinheit (20, 31) bereitzustellen.

15. Aufzugsystem mit einem Aufzugschacht (41) und einen darin verfahrbar angeordneten Fahrkorb (42), welches ein Messsystem (30) zur Bestimmung der Position des Fahrkorbs (42) im Aufzugschacht (41) mit einer Sensoranordnung oder Sensoreinheit (20, 31) und einem Messband (10) gemäß Anspruch 14 aufweist.

## Claims

1. A guide unit (25) for a sensor arrangement (20) for determining the position of an elevator car (42) in an elevator shaft (41) by means of an interaction of at least one magnetic field sensor (21) of the sensor arrangement (20) with a position coding of a measuring tape (10) which is relatively displaceable to the sensor arrangement (20), the guide unit (25) being realized to interact with a groove-shaped first recess (28) of a housing (50) of the sensor arrangement (20) and for guiding the measuring tape (10) along the at least one magnetic field sensor (21), **characterized in that** the guide unit (25) has magnetic field generating elements (22a, 22b, 78) for a temporary magnetization of a measuring tape (10) made of ferromagnetic material and guided in the guide unit (25) along a longitudinal dimension direction (L).

2. The guide unit according to claim 1,
**characterized in that** the magnetic field generating elements (22a, 22b, 78) are disposed in such a manner that the position coding (12) of the measuring tape (10) is readable or scannable by the at least one magnetic field sensor (21) of the sensor arrangement (20), said position coding (12) preferably comprising clearances (15a, 15b) in a ferromagnetic base body (11) of the measuring tape (10), said clearances (15a, 15b) being specifically disposed and/or specifically realized.

3. The guide unit according to claim 1 or 2,
**characterized in that** the magnetic field generating elements have at least two permanent magnets (22a, 22b) of a different polarity, which are disposed laterally to the longitudinal dimension direction (L), in particular in a positive and/or materially bonded manner and preferably in lateral cavities (29b) of the guide unit.

4. The guide unit according to any one of claims 1 to 3,
**characterized in that**
the guide unit (25) has stop elements (74) in the form of a cross section enlargement at the end for forming a preferably positive stop in the longitudinal dimension direction (L) in the mounted state with the sensor arrangement (20).

5. The guide unit according to any one of claims 1 to 4,
**characterized in that**
the guide unit (25) consists of a plastic material, in particular of a low-friction and low-wear plastic, preferably PTFE.

6. The guide unit according to any one of claims 1 to 5,
**characterized in that**
the guide unit (25) has a length (L₂) of 100 mm to 700 mm, preferably of 250 to 550 mm, and/or a width (B₂) of 8 mm to 20 mm, preferably of 10 mm to 15 mm.

7. An adapter device, in particular adapter plate, for being attached preferably on the bottom side to a housing (50) of a sensor arrangement for determining the position of an elevator car (42) in an elevator shaft (41) by means of an interaction of at least one magnetic field sensor (21) of the sensor arrangement (20) with a position coding (12) of a measuring tape (10) which is relatively displaceable to the sensor arrangement (20), the adapter device (68) being realized to interact with a groove-shaped first recess (28) of the housing (50) of the sensor arrangement (20), **characterized in that** the adapter device (68) has a groove-shaped second recess (70) realized to accommodate a measuring tape (10) made of ferromagnetic material and for accommodating a guide rail (29) for the measuring tape (10) in such a manner that the measuring tape (10) is guided along the at least one magnetic field sensor (21) of the sensor arrangement (20), the adapter device (68) having magnetic field generating elements (22a, 22b, 78) disposed laterally to a longitudinal dimension direction (L) of the groove-shaped second recess (70) and realized for a temporary magnetization of a measuring tape (10) made of ferromagnetic material.

8. The adapter device according to claim 7,
**characterized in that**
the adapter device (68) has a preferably essentially U-shaped profiling (69) realized to engage into the groove-shaped first recess (28) of the housing (50) of the sensor arrangement (20) in such a manner that the groove-shaped second recess (70) of the adapter device (68) is disposed essentially parallel to the first recess (28) of the housing (50).

9. The adapter device according to claim 7 or 8,
**characterized in that**
the second groove-shaped recess (70) is disposed or realized in a bottom side (52) of the adapter device (68), first projections (54) being realized along the bottom side (52) in order to close the groove-shaped second recess (70) at least partially transversely to the longitudinal dimension direction (L) for accommodating the guide rail (29) in a positive manner.

10. The adapter device according to any one of claims 7 to 9,
**characterized in that**
the adapter device has two lateral accommodating openings (58) for accommodating permanent magnets (22a, 22b) of a different polarity as magnetic field generating elements, said permanent magnets (22a, 22b) being preferably separated from the groove-shaped recess (70) for the guide rail (29) by second projections (60) and/or by partition walls (64).

11. The adapter device according to any one of claims 7 to 9,
**characterized in that**
the adapter device has at least two, preferably a plurality of, electromagnetic coil elements (78) which are disposed laterally to the longitudinal dimension direction as magnetic field generating elements, each of which is realized to produce a temporary magnetic field by means of an applicable control signal.

12. A sensor unit (31) for determining the position of an elevator car (42) in an elevator shaft (41) by means of an interaction of at least one magnetic field sensor (21) of the sensor unit (31) with a position coding (12) of a measuring tape (10) which is relatively displaceable to the sensor unit (31), a housing (50) of the sensor unit (31) having a groove-shaped recess (70) for guiding the measuring tape (10), the sensor unit (31) having a guide rail (29) disposed, preferably exchangeably, in the groove-shaped recess (70) and serving to guide the measuring tape (10) along the at least one magnetic field sensor (21), **characterized in that** the sensor unit (31) has magnetic field generating elements (22a, 22b, 78) disposed preferably laterally to a longitudinal dimension direction (L) of the groove-shaped recess (70) and realized for a temporary magnetization of the measuring tape (10) made of ferromagnetic material.

13. The sensor unit according to claim 12,
**characterized in that** the magnetic field generating elements have at least two permanent magnets (22a, 22b), preferably bar magnets of a different polarity, or at least two, preferably a plurality of, electromagnetic coil elements (78) as magnetic field generating elements.

14. A measuring system having a sensor arrangement (20) or a sensor unit (31) according to claim 12 or 13 for determining the position of an elevator car (42) in an elevator shaft (41) by means of an interaction of at least one magnetic field sensor (21) of the sensor arrangement or sensor unit (20, 31) with a position coding (12) of a measuring tape (10) which is relatively displaceable to the sensor arrangement or sensor unit (20, 31), and a guide unit (25) according to any one of claims 1 to 6 which is selectively connectable to the sensor arrangement (20) or an adapter device according to any one of claims 7 to 11 which is connectable thereto, and a measuring tape (10) of a ferromagnetic material, the magnetic field generating elements (22a, 22b, 78) of the guide unit (25), the adapter device (68) or the sensor unit (31) being realized to provide a temporary magnetization of a measuring tape (10) for reading the position coding (12) of the measuring tape (10) by means of the at least one magnetic field sensor (21) of the sensor arrangement or sensor unit (20, 31).

15. An elevator system having an elevator shaft (41) and an elevator car (42) movably disposed therein, said elevator system having a measuring system (30) for determining the position of the elevator car (42) in an elevator shaft (41) by means of a sensor arrangement or sensor unit (20, 31) and a measuring tape (10) according to claim 14.

## Revendications

1. Unité de guidage (25) pour un agencement de capteur (20) pour déterminer la position d'une cabine (42) dans une cage d'ascenseur (41) au moyen d'une interaction d'au moins un capteur (21) de champ magnétique de l'agencement de capteur (20) avec un codage de position d'un ruban à mesurer (10) déplaçable relativement par rapport à l'agencement de capteur (20), l'unité de guidage (25) étant réalisée pour interagir avec un premier évidement (28) en forme de rainure d'un boîtier (50) de l'agencement de capteur (20) et pour guider le ruban à mesurer (10) le long d'au moins un capteur (21) de champ magnétique, **caractérisée en ce que** l'unité de guidage (25) a des moyens (22a, 22b, 78) de génération de champs magnétiques pour la magnétisation temporaire d'un ruban à mesurer (10) en matériau ferromagnétique et guidé dans l'unité de guidage (25) le long d'une direction (L) de la dimension longitudinale.

2. Unité de guidage selon la revendication 1,
**caractérisée en ce que** les moyens (22a, 22b, 78) de génération de champs magnétiques sont disposés de manière que le codage de position (12) du ruban à mesurer (10) est capable d'être lu ou capable d'être échantillonné par l'au moins un capteur (21) de champ magnétique de l'agencement de capteur (20), ledit codage de position (12) de préférence comprenant des échancrures (15a, 15b) dans un corps de base (11) ferromagnétique du ruban à mesurer (10), lesdites échancrures (15a, 15b) étant spécifiquement réalisées et/ou spécifiquement disposées.

3. Unité de guidage selon la revendication 1 ou 2,
**caractérisée en ce que** les moyens de génération de champs magnétiques sont au moins deux aimants permanents (22a, 22b) d'une polarité différente qui sont disposés latéralement par rapport à la direction (L) de la dimension longitudinale, notamment par liaison de forme et/ou de matière et de préférence dans des cavités (29b) latérales de l'unité de guidage.

4. Unité de guidage selon l'une quelconque des revendications 1 à 3,
**caractérisée en ce que**
l'unité de guidage (25) a des moyens d'arrêt (74) sous la forme d'un élargissement de la section transversale à l'extrémité pour réaliser un arrêt, de préférence par forme, dans la direction (L) de la dimension longitudinale a l'état monté avec l'agencement de capteur (20).

5. Unité de guidage selon l'une quelconque des revendications 1 à 4,
**caractérisée en ce que**
l'unité de guidage (25) consiste en un matériau plastique, notamment un plastique à faible frottement et faible usure, de préférence PTFE.

6. Unité de guidage selon l'une quelconque des revendications 1 à 5,
**caractérisée en ce que**
l'unité de guidage (25) a une longueur (L₂) de 100 mm à 700 mm, de préférence de 250 à 550 mm, et/ou une largeur (B₂) de 8 mm à 20 mm, de préférence de 10 mm à 15 mm.

7. Dispositif d'adaptation, notamment une plaque d'adaptation, pour la fixation, de préférence, du côté de fond sur un boîtier (50) d'un agencement de capteur (20) pour déterminer la position d'une cabine (42) dans une cage d'ascenseur (41) au moyen d'une interaction d'au moins un capteur (21) de champ magnétique de l'agencement de capteur (20) avec un codage de position (12) d'un ruban à mesurer (10) déplaçable relativement par rapport à l'agencement de capteur (20), le dispositif d'adaptation (68) étant réalisée pour interagir avec un premier évidement (28) en forme de rainure du boîtier (50) de l'agencement de capteur (20), **caractérisé en ce que**
le dispositif d'adaptation (68) a un deuxième évidement (70) en forme de rainure réalisé pour loger un ruban à mesurer (10) en matériau ferromagnétique et pour loger un rail de guidage (29) pour le ruban à mesurer (10) de manière que le ruban à mesurer (10) est guidé le long d'au moins un capteur (21) de champ magnétique de l'agencement de capteur (20), le dispositif d'adaptation (68) ayant des moyens (22a, 22b, 78) de génération de champs magnétiques disposés de côté d'une direction (L) de la dimension longitudinale du deuxième évidement (70) en forme de rainure et réalisés pour la magnétisation temporaire du ruban à mesurer (10) en matériau ferromagnétique.

8. Dispositif d'adaptation selon la revendication 7,
**caractérisé en ce que**
le dispositif d'adaptation (68) a un profilage (69), de préférence essentiellement en forme de U, qui est réalisé pour venir en prise avec le premier évidement (28) en forme de rainure du boîtier (50) de l'agencement de capteur (20) de manière que le deuxième évidement (70) en forme de rainure du dispositif d'adaptation (68) est disposé essentiellement parallèlement au premier évidement (28) du boîtier (50).

9. Dispositif d'adaptation selon la revendication 7 ou 8,
**caractérisé en ce que**
le deuxième évidement (70) en forme de rainure est disposé ou réalisé dans un côté inférieur (52) du dispositif d'adaptation (68), des premières saillies (54) étant réalisées le long du côté inférieur (52) afin de fermer le deuxième évidement (70) en forme de rainure au moins partiellement transversalement à la direction (L) de la dimension longitudinale pour loger le rail de guidage (29) par liaison de forme.

10. Dispositif d'adaptation selon l'une quelconque des revendications 7 à 9,
**caractérisé en ce que**
le dispositif d'adaptation a deux ouvertures de logement (58) latérales pour loger des aimants permanents (22a, 22b) d'une polarité différente comme moyens de génération de champs magnétiques, lesdits aimants permanents (22a, 22b) étant séparés, de préférence, par des deuxièmes saillies (60) et/ou par des cloisons de séparation (64) de l'évidement (70) en forme de rainure pour le rail de guidage (29).

11. Dispositif d'adaptation selon l'une quelconque des revendications 7 à 9,
**caractérisé en ce que**
le dispositif d'adaptation a au moins deux, de préférence une pluralité de, moyens de bobine (78) électromagnétiques disposés de côté de la direction de la dimension longitudinale comme moyens de génération de champs magnétiques dont chacun est réalisé pour produire un champ magnétique temporaire au moyen d'un signal de contrôle applicable.

12. Unité de capteur (31) pour déterminer la position d'une cabine (42) dans une cage d'ascenseur (41) au moyen d'une interaction d'au moins un capteur (21) de champ magnétique de l'unité de capteur (31) avec un codage de position (12) d'un ruban à mesurer (10) déplaçable relativement par rapport à l'unité de capteur (20), un boîtier (50) de l'unité de capteur (31) ayant un évidement (70) en forme de rainure pour guider le ruban à mesurer (10), l'unité de capteur (31) ayant un rail de guidage (29) disposé, de préférence de manière échangeable, dans l'évidement (70) en forme de rainure et servant à guider le ruban à mesurer (10) le long d'au moins un capteur (21) de champ magnétique, **caractérisé en ce que** l'unité de capteur (31) a des moyens (22a, 22b, 78) de génération de champs magnétiques disposés, de préférence, de côté d'une direction (L) de la dimension longitudinale de l'évidement (70) en forme de rainure et réalisés pour la magnétisation temporaire du ruban à mesurer (10) en matériau ferromagnétique.

13. Unité de capteur selon la revendication 12,
**caractérisée en ce que** les moyens de génération de champs magnétiques ont au moins deux aimants permanents (22a, 22b), de préférence des barreau aimantés d'une polarité différente, ou au moins deux, de préférence une pluralité de, moyens de bobine (78) électromagnétiques comme moyens de génération de champs magnétiques.

14. Système de mesure ayant un agencement de capteur (20) ou une unité de capteur (31) selon la revendication 12 ou 13 pour déterminer la position d'une cabine (42) dans une cage d'ascenseur (41) au moyen d'une interaction d'au moins un capteur (21) de champ magnétique de l'agencement de capteur ou l'unité de capteur (20, 31) avec un codage de position (12) d'un ruban à mesurer (10) déplaçable relativement par rapport à l'agencement de capteur ou l'unité de capteur (20, 31), et une unité de guidage (25) selon l'une quelconque des revendications 1 à 6 qui est capable d'être reliée sélectivement à l'agencement de capteur (20) ou un dispositif d'adaptation selon l'une quelconque des revendications 7 à 11 qui est capable d'être relié à celui-ci, et un ruban à mesurer (10) en matériau ferromagnétique, les moyens (22a, 22b, 78) de génération de champs magnétiques de l'unité de guidage (25), du dispositif d'adaptation (68) ou de l'unité de capteur (31) étant réalisés pour prévoir une magnétisation temporaire du ruban à mesurer (10) pour lire le codage de position (12) du ruban à mesurer (10) au moyen de l'au moins un capteur (21) de champ magnétique de l'agencement de capteur ou l'unité de capteur (20, 31).

15. Système d'ascenseur ayant une cage d'ascenseur (41) et une cabine (42) disposée dans celle-ci de manière mobile, ledit système d'ascenseur ayant un système de mesure (30) pour déterminer la position de la cabine (42) dans la cage d'ascenseur (41) au moyen d'un agencement de capteur ou une unité de capteur (20, 31) et un ruban à mesurer (10) selon la revendication 14.
